(19) Europäisches Patentamt
European Patent Office
Office européen des brevets

(11) **EP 2 271 686 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(21) Anmeldenummer: **09733602.8**

(22) Anmeldetag: **09.04.2009**

(51) Int Cl.:
*C08G 18/10* *(2006.01)*   *C08G 18/12* *(2006.01)*
*C08G 18/08* *(2006.01)*   *C08G 18/28* *(2006.01)*
*C08G 18/40* *(2006.01)*   *C08G 18/42* *(2006.01)*
*C08G 18/66* *(2006.01)*   *C08G 18/78* *(2006.01)*
*C08G 18/80* *(2006.01)*   *C09D 175/06* *(2006.01)*

(86) Internationale Anmeldenummer:
**PCT/EP2009/002673**

(87) Internationale Veröffentlichungsnummer:
**WO 2009/127371 (22.10.2009 Gazette 2009/43)**

(54) **Wässrige Polyurethanlösungen**

Aqueous polyurethane solutions

Polyuréthanes aqueux ou solubles dans l'eau

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.04.2008 EP 08007569**

(43) Veröffentlichungstag der Anmeldung:
**12.01.2011 Patentblatt 2011/02**

(73) Patentinhaber: **Bayer MaterialScience AG**
**51368 Leverkusen (DE)**

(72) Erfinder:
• **BLUM, Harald**
**97840 Hafenlohr (DE)**
• **MÜLLER, Heino**
**51375 Leverkusen (DE)**

(56) Entgegenhaltungen:
**WO-A-00/24797**       **WO-A-03/080694**
**WO-A-2007/005808**

EP 2 271 686 B1

**Beschreibung**

Die vorliegende Erfindung betrifft neuartige einkomponentige Polyurethansysteme basierend auf wasserlöslichen Polyurethanen bzw. ihren wässrigen Lösungen, sowie die Verwendung.

Wässrige Bindemittel auf Basis von Polyurethan-Dispersionen sind seit langem bekannter Stand der Technik und beispielsweise beschrieben in Houben-Weyl, Methoden der organischen Chemie, 4. Aufl. Band E 20, S. 1659 (1987), J. W. Rosthauser, K. Nachtkamp in "Advances in Urethane Science and Technology", K. C. Frisch und D. Klempner, Editiors, Vol. 10, S. 121-162 (1987) oder D.Dietrich, K. Uhlig in Ullmann's Encyclopedia of Industrial Chemistry, Vol. A 21, S. 677 (1992).

Aminoalkohole sind hierbei oftmals beschriebene Aufbaukomponenten. So beschreibt DE-A 4237965 wässrige Polyurethan-Dispersionen, die erhalten werden durch Umsetzung von Di- oder Polyisocyanaten, Dimerdiol enthaltenden hydrophoben Polyolen und hydrophilierenden Verbindungen. In den Beispielen werden Dispersionen mit eher niedrigen Feststoffgehalten von 25 bis 40 Gew.-% beschrieben, der erfindungswesentliche Einsatz von Dimerdiolen enthaltenden hydrophoben Diolen schränkt die Variabilität solcher Produkte jedoch stark ein. Eine ggf. mögliche und beschriebene Umsetzung der isocyanatfunktionellen Zwischenstufe vor dem Dispergieren mit Aminoalkoholen, ist nicht erfindungswesentlich, da auch Triole eingesetzt werden können bzw. auch eine direkte Dispergierung und Reaktion mit Wasser möglich ist.

DE-A 4337961 beschreibt wässrige Lacke, enthaltend wasserverdünnbares Polyurethanharz, herstellbar durch Umsetzung von Polyisocyanat, hydrophilierenden Komponenten, ggf. Polyester- bzw. Polyetherpolyolen und ggf. niedermolekularen Polyolen zu einem isocyanatfunktionellen Prepolymer mit einer Säurezahl von 18 bis 70 mg KOH/g, wobei in einem weiteren Schritt ein Teil der Isocyanatgruppen mit Blockierungsmittel umgesetzt, ggf. weiteres Polyisocyanat zugegeben und anschließend mit Verbindungen mit mindestens einer primären oder sekundären Aminogruppe und mindestens einer Hydroxylgruppe umgesetzt wird. Dadurch werden unter Einbrennbedingungen (in den Beispielen bei 160°C) selbstvernetzende Polyurethan-Dispersionen, d.h. Dispersionen, bei denen in einem Molekül sowohl Hydroxylgruppen als auch blockierte Isocyanatgruppen enthalten sind, mit relativ niedrigen Feststoffgehalten (37 bis 42 Gew. -% in den Beispielen) für Einbrennlacke, insbesondere für Einbrennfüller in der Automobillackierung erhalten. Aufgrund der niedrigen Mengen der eingebauten Aminoalkohole sind die Harnstoffgruppengehalte, die Funktionalitäten bezogen auf Hydroxylgruppen und die Hydroxylgruppengehalte nur gering.

DE-A 10214028 beschreibt Polyurethane für wasserverdünnbare Füllerzusammensetzungen in der Automobillackierung mit einem Festkörpergehalt von größer als 50 Gew.-%, die bei Einbrennbedingungen ab 140°C die Anforderungen bezüglich Steinschlagbeständigkeit erfüllen und Überbrennstabilität aufweisen. Es wird beschrieben, dass solch hohe Feststoffgehalte mit wasserdispergierbaren Polyurethanen, die als Hydrophilierungsmittel neutralisierte Dimethylolpropionsäure enthalten, nicht erreichbar seien. Die erfindungsgemäßen wasserverdünnbaren Polyurethane mit mindestens zwei freien Hydroxylgruppen werden erhalten durch Umsetzung von Alkanolaminen mit einer NCO-Verbindung zu einem hydroxyfunktionellen Zwischenprodukt, gefolgt von der Addition eines cyclischen Carbonsäureanhydrids an die Hydroxylgruppen unter Ausbildung von Esterverknüpfungen. Die für die Dispergierung des Polyurethans erforderlichen Carboxyl- bzw. Carboxylatgruppen werden somit über ein Säureanhydrid in das Polymer eingebaut. Diese Art der Aufsäuerung über Anhydride führt zum Einbau der hydrophilierenden Verbindung über Halbesterbindungen. Es ist bekannt, dass solche Strukturen hydrolyseempfindlich sind, deshalb haben solche Dispersionen nur eine sehr beschränkte Haltbarkeit. In den Beispielen werden Polyurethan-Dispersionen mit Feststoffgehalten von 43 bis 45 Gew. -% erhalten. Hohe Funktionalitäten, bzw. hohe Hydroxylgruppengehalte sind auf diesem Weg nicht erzielbar, da ein Teil der Hydroxylgruppen durch die Umsetzung mit dem Säureanhydrid verbraucht wird.

DE-A 10147546 beschreibt organisch gelöste selbstvernetzende Polyurethane erhalten durch Umsetzung von speziellen aliphatisch-aromatischem Polyester, partiell blockiertem Polyisocyanat und einer Verbindung mit mindestens 2 isocyanatreaktiven Gruppen, wie z.B. einen Aminoalkohol, die bei Verwendung als Basislack vorteilhafte Eigenschaften aufweisen sollen und gute CAB Verträglichkeit besitzen. Die Polyurethane sind in relativ großen Mengen organischen Lösemitteln gelöst und entsprechen damit nicht mehr den heutigen Anforderungen in Bezug auf Reduzierung der Emissionen.

DE-A 19849207 beschreibt wasserverdünnbare Bindemittelzusammensetzungen enthaltend wasserverdünnbare Polyurethanharnstoff-Pastenharze und Polyetherpolyole für die Formulierung von Pigmentpasten zur Einarbeitung in wässrige Beschichtungsmittel. Die beschriebenen wasserverdünnbaren Polyurethanharnstoff-Pastenharze sind Umsetzungsprodukte von Polyol, Hydrophilierungskomponente, Polyisocyanat und Hydroxyamin und enthalten darüber hinaus eine zusätzliche Polyetherpolyolkomponente. Geeignete hydroxyfunktionelle Monoamine sind sowohl Amine mit primären, als auch mit sekundären Aminogruppen. Daraus werden gemäß Offenlegung vorzugsweise organische Lösemittel enthaltende Polyurethan-Dispersionen mit Feststoffgehalten bis 50, vorzugsweise bis 42 Gew. -% erhalten. Die in den Beispielen hergestellten Polyurethan-Dispersionen weisen Feststoffgehalte von 30 bis 35 Gew.- % sowie NMP Gehalte von ca. 6 Gew.-% auf. Damit genügen diese Produkte modernen Anforderung bezüglich Lösemittelgehalt und hohem Feststoffgehalt nicht mehr, außerdem schränkt der zwingende Einsatz von Polyetherpolyolen die Verwendungsmöglichkeiten auf Anwendungen ein, in denen Lichtechtheit und Bewitterungsstabilität von untergeordneter Bedeutung sind.

Obwohl der Stand der Technik bei wässrigen Polyurethan-Dispersionen sehr umfangreich ist, besteht nach wie vor großer Bedarf nach verbesserten wässrigen Produkten. Insbesondere gefordert sind niedrige bis keine Emissionen, hohe Feststoffgehalte, hohe Verarbeitungssicherheit und Robustheit gegenüber äußeren Einflüssen, z.B. bezüglich schwankenden Werten der Luftfeuchte oder tiefen Lagertemperaturen, hohe störungsfrei erzielbare Schichtstärken, Hydrolysestabilität, exzellente filmmechanische Eigenschaften und darüber hinaus häufig auch hohe Vernetzungsdichten bzw. hohe Funktionalitäten.

Problematisch bei dispersen Systemen wie denen der vorstehend genannten Art ist jedoch, dass zur eigentlichen Filmbildung beim Beschichtungsprozess die Koaleszenz und Verfilmung der dispersen Polymerpartikel so stattfinden muss, dass ein homogener optisch einwandfreier Film erhalten wird. Aufgrund der Komplexizität des Vorganges ist dies deutlich schwieriger und fehlerbehafteter als bei Systemen, in denen das filmbildende Polymer in gelöstem Zustand vorliegt.

Im Gegensatz zu Lösungen von Polyurethanen in organischen Lösemitteln sind qualitativ hochwertige Polyurethanlösungen in Wasser bis heute nicht bekannt.

Aufgabe der vorliegenden Erfindung war es nun wässrige einkomponentige Polyurethansysteme mit verbesserten Verfilmungseigenschaften zur Verfügung zu stellen, die die oben genannten Anforderungen erfüllen und sich für optisch einwandfreie Beschichtungen mit vorteilhaftem Eigenschaftsprofil beispielsweise für Anwendungen im Einbrennlackbereich eignen.

Es wurde nun gefunden, dass sich dies durch neuartige wasserlösliche Polyurethan-Polyhamstoffe bzw. deren Lösungen erreichen lässt.

Gegenstand der vorliegenden Erfindung sind daher wässrige Polyurethanlösungen mindestens enthaltend

A) wasserlösliche harnstoffguppenhaltige, hydroxyfunktionelle Polyurethane mit Hydroxylgruppengehalten von 2 bis 10 Gew. -% und Gehalten an Harnstoffgruppen (berechnet als -NH-CO-NH-), die von Aminoalkoholen mit einer primären oder sekundären Aminogruppe und mindestens einer Hydroxylgruppe abgeleitet sind, von 3 bis 20 Gew. -%, jeweils bezogen auf das harnstoffguppenhaltige, hydroxyfunktionelle Polyurethan oder deren wässrige Lösungen und

B) Vernetzer, welche keine freien Isocyanatgruppen enthalten und gegebenenfalls hydrophiliert sind und

C) ggf. weiteren wässrig gelösten bzw. dispergierten bzw. organisch gelösten, ggf. hydroxyfunktionellen Oligomeren bzw. Polymeren.

Die erfindungsgemäßen einkomponentigen Polyurethansysteme sind bei Raumtemperatur und in der Regel auch bis 40 oder auch 50°C über einen längeren Zeitraum lagerstabil.

Typische Aushärtetemperaturen sind 70 bis 250°C, bevorzugt 90 bis 180°C.

Die Endeigenschaften und auch die Aushärtegeschwindigkeit und auch die Lagerstabilität können durch Zusatz von Katalysatoren beeinflusst werde. Prinzipiell geeignet Katalysatoren sind z.B. tertiäre Amine wie Diazabicyclononan; Diazabicycloundecan, Triethylamin, Ethyldiisopropylamin, Metallverbindungen auf Basis von Zinn, wie Zinn-II-oktoat, Dibutylzinndilaurat, Zinnchlorid, auf Basis von Zink, Magnesium, Zirkonium, Wismut, Molybdän wie z.B. Lithiummolybdat und auch anderen Metallen. Übliche Einsatzmengen sind 0,001 bis 1 Gew.-% bezogen auf den Festgehalt der auszuhärtenden Formulierung.

Vorzugsweise enthalten solche erfindungsgemäßen einkomponentigen Polyurethanlosüngen

A) 30 bis 98 Gew. -% der erfindungswesentlichen hydroxyfunktionellen, harnstoffgruppenhaltigen Polyurethane bzw. deren Lösungen

B) 2 bis 70 Gew. -% ggf. hydrophil modifizierter, blockierte Isocyanatgruppen aufweisender Polyisocyanatvemetzer und/oder Amino- bzw. Harnstoffharzvernetzer und

C) 0 bis 65 Gew.-% sonstiger wässriger oder organisch gelöster bzw. dispergierter, ggf. hydroxylfunktioneller Oligomere bzw. Polymere,

wobei sich die Prozentangaben zu 100 Gew.-% aufaddieren und auf den Feststoffgehalt der Formulierung bezogen sind.

Besonders bevorzugt enthalten solche erfindungsgemäßen einkomponentigen Polyurethansysteme,

45 bis 95 Gew. -% der Komponente A),

5 bis 55 Gew. -% der Komponente B).

0 bis 50 Gew. -% der Komponente C),

wobei sich die Prozentangaben zu 100 Gew.-% aufaddieren und auf den Feststoffgehalt der Formulierung bezogen sind.

Die erfindungswesentlichen wasserlöslichen harnstoffguppenhaltigen, hydroxyfunktionellen Polyurethane sind erhältlich durch Herstellung NCO-funktioneller Prepolymere durch Umsetzung von

a) mindestens einem hydroxy- und /oder aminofunktionellen Hydrophilierungsmittel mit mindestens einer Säuregruppe bzw. dem Salz einer Säuregruppe oder mindestens einer tertiären Aminogruppe bzw. dem Salz einer tertiären Aminogruppe,

b) mindestens einem Polyol

c) mindestens einem Polyisocyanat

d) ggf. sonstigen von den Verbindungen der Komponenten a), b) und e) verschiedenen hydroxy- und/oder aminofunktionellen Verbindungen
und deren Reaktion

e) mit einer Aminoalkohol-Komponente, aus Aminoalkoholen mit einer primären oder sekundären Aminogruppe und mindestens einer Hydroxylgruppe umgesetzt werden, wobei der Anteil an Aminoalkoholen mit einer sekundären Aminogruppe bezogen auf die Gesamtmenge der Komponente e) mindestens 60 Gew.-% beträgt,

wobei die aus den Verbindungen der Komponente a) herrührenden Säuregruppen oder tertiäre Aminogruppen im harnstoffguppenhaltigen, hydroxyfunktionellen Polyurethan durch ganze oder teilweise Neutralisation in ihrer Salzform vorliegen können.

Die erfindungswesentlichen Polyurethane können auch in Form ihrer wässrigen Lösungen in Komponente A) eingesetzt werden.

Diese sind erhältlich, in dem zunächst NCO-funktionelle Prepolymere durch Umsetzung von

a) mindestens einem hydroxy- und /oder aminofunktionellen Hydrophilierungsmittel mit mindestens einer Säuregruppe bzw. dem Salz einer Säuregruppe oder mindestens einer tertiären Aminogruppe bzw. dem Salz einer tertiären Aminogruppe,

b) mindestens einem Polyol

c) mindestens einem Polyisocyanat

d) ggf. sonstigen von den Verbindungen der Komponenten a), b) und e) verschiedenen hydroxy- und/oder aminofunktionellen Verbindungen
hergestellt werden und diese dann

e) mit einer Aminoalkohol-Komponente, aus Aminoalkoholen mit einer primären oder sekundären Aminogruppe und mindestens einer Hydroxylgruppe umgesetzt werden, wobei der Anteil an Aminoalkoholen mit einer sekundären Aminogruppe bezogen auf die Gesamtmenge der Komponente e) mindestens 60 Gew.-% beträgt
und die so erhaltenen harnstoffguppenhaltigen, hydroxyfunktionellen Polyurethane

f) in Wasser gelöst werden, wobei vor oder während des Lösungsvorgangs in Wasser die Säure- oder tertiäre Aminogruppen der Hydrophilierungsmittel a) mit einem Neutralisationsmittel umgesetzt werden.

Die in a) eingesetzten Hydrophilierungsmittel können als Säuregruppe zur anionischen Hydrophilierung Carbonsäure- oder Sulfonsäuregruppen und/oder deren korrespondierende Säureanionen enthalten. Zur kationischen Hydrophilierung können die Verbindungen der Komponente a) tertiäre Aminogruppen oder die entsprechend protonierten quartären Ammoniumgruppen enthalten.

Die Verbindungen der Komponente a) werden im erfindungsgemäßen Verfahren typischerweise in Mengen von 0,5 bis 10 Gew. -%, bevorzugt 1 bis 8 Gew. -% und besonders bevorzugt 2 bis 7 Gew.- % bezogen auf die harnstoffguppenhaltigen, hydroxyfunktionellen Polyurethane eingesetzt.

Geeignete Hydrophilierungsmittel a) sind Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Dimethylolessigsäure, 2,2-Dimethylolpentansäure, Dihydroxybernsteinsäure Hydroxypivalinsäure, N-(2-Aminoethyl)alanin, 2-(2-Amino-ethylamino)-ethansulfonsäure, Ethylendiaminpropyl- oder -butylsulfonsäure, 1,2- oder 1,3-Propylendiaminethylsulfonsäure, Äpfelsäure, Zitronensäure, Glykolsäure, Milchsäure, Glycin, Alanin, Taurin, Lysin, 3,5-Diaminobenzoesäure, 6-Aminohexansäure, 11-Aminoundecansäure, Aminoessigsäure ein Additionsprodukt von IPDA, Hexamethylendiamin oder anderer Diamine und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO$_3$, z.B. beschrieben in der DE-A 2 446 440 (Seite 5-9, Formel I-III) bzw. die Salze der beschriebenen Hydrophilierungsmittel, sowie Mischungen der genannten und ggf. auch anderer Hydrophilierungsmittel.

Geeignete Hydrophilierungsmittel a) sind ebenfalls kationische Hydrophilierungsmittel wie mono-, di- oder trihydroxyfunktionelle tertiäre Amine bzw. mono-, di- oder triaminofunktionelle tertiäre Amine und deren Salze wie N-Methyldiethanolamin, N-Ethyldiethanolamin, N-Methyldiisopropanolamin, Triisopropanolamin, Triethanolamin, Dimethylethanolamin, Dimethylisopropanolamin bzw. die Salze der beschriebenen kationischen Hydrophilierungsmittel.

Bevorzugt werden in a) Hydrophilierungsmittel der vorstehend genannten Art mit Carbonsäure- oder Sulfonsäuregruppen bzw. den entsprechenden Säureanionen eingesetzt.

Besonders bevorzugte Hydrophilierungsmittel sind 2-(2-Amino-ethylamino-)ethansulfonsäure, das Additionsproduktes von IPDA und Acrylsäure (EP-A 0 916 647, Beispiel 1), Dimethylolpropionsäure und Hydroxypivalinsäure.

Geeignete Polyole b) sind die in der Polyurethanchemie an sich bekannten hydroxyfunktionellen Verbindungen wie

b1) Polyester,

b2) niedermolekulare Verbindungen mit Molekulargewichten von 62 bis 500 g/mol,

b3) Polycarbonate

b4) C2-Polyether und/oder C3-Polyether,

b5) C4-Polyether

wie auch hydroxyfunktionelle Epoxide, Polyolefine, Polymerisate, Rizinusöl, in Bezug auf Funktionalität und/oder Anzahl der Doppelbindungen modifizierte Rizinusöle, Kohlenwasserstoffharze, Formaldehyd-Kondensationsprodukte und Mischungen der vorstehend genannten Verbindungen.

Bezüglich der Molekulargewichte von b1), b3), b4) und b5) gibt es keine Einschränkungen, üblicherweise betragen die Molekulargewichte 500 bis 20000 g/mol, bevorzugt 500 bis 12000 g/mol.

Die Polyole b1) bis b5) können einzeln oder in beliebigen Mischungen untereinander aber auch gegebenenfalls in Mischungen mit weiteren Polyolen als Teil von b) eingesetzt werden.

Polyester b1) weisen typischerweise eine durchschnittliche Funktionalität von 1 bis 4, bevorzugt von 1,8 bis 3 und besonders bevorzugt von 2 auf. Es können dabei auch Mischungen verschiedener Polyester und auch Mischungen von Polyestern mit unterschiedlichen Funktionalitäten eingesetzt werden. Die Molekulargewichte von Polyestern b1) liegen besonders bevorzugt im Bereich von 700 bis 5000 g/mol.

Geeignete Polyester b1) können nach an sich bekannten Verfahren unter Abspaltung von Wasser bei Temperaturen von 100 bis 260°C, ggf. unter Mitverwendung üblicher Veresterungskatalysatoren wie para-Toluolsulfonsäure, Dibutylzinndilaurat, HCl, Zinn-II-chlorid, usw., vorzugsweise nach dem Prinzip einer Schmelz- oder Azeotropkondensation, ggf. unter Anlegen eines Vakuums bzw. dem Einsatz eines Schleppgases aus Mono-, Di-, Tri- und/oder Tetracarbonsäuren bzw. deren Anhydriden, mono-, di-, tri- und/oder tetrafunktionellen Alkoholen und ggf. Lactonen hergestellt werden. Im Falle einer azeotropen Veresterung wird das Schleppmittel, üblicherweise Isooctan, Xylol, Toluol oder Cyclohexan nach beendeter Reaktion im Vakuum abdestilliert. Bevorzugtes Herstellverfahren für die Polyester b1) ist eine Schmelzkondensation im Vakuum.

Geeignete Säuren als Polyesterbaustein können sein Phthalsäureanhydrid, Isophthalsäure, Terephthalsäure, Adipinsäure, Sebacinsäure, Korksäure, Bernsteinsäure, Maleinsäureanhydrid, Fumarsäure, Dimerfettsäuren, Tetrahydrophthalsäureanhydrid, Hexahydrophthalsäureanhydrid, Cyclohexandicarbonsäure, Trimellithsäureanhydrid, C8-C22-Fettsäuren wie 2-Ethylhexansäure, Stearinsäure, Ölsäure, Sojaölfettsäure, Erdnussölfettsäure, andere ungesättigte Fettsäuren, hydrierte Fettsäuren, Benzoesäure, Cyclohexancarbonsäure und Mischungen der genannten und ggf. auch anderer Säuren.

Geeignete Alkohole als Polyesterbaustein sind z.B. 1,2-Ethylenglykol, Diethylenglykol, Triethylenglykol, Tetraethylenglykol, 1,2-Propylenglykol, Dipropylenglykol, Tripropylenglykol, 1,3-Propandiol, 1,3-Butandiol, 1,4-Butandiol, 1,6-Hexandiol, Neopentylglykol, 1,4-Cyclohexandimethanol, 1,4-Cyclohexandiol, Butendiol, Butindiol, hydrierte Bisphenole, Trimethylpentandiol, 1,8-Octandiol und/oder Tricyclodecandimethanol, Trimethylolpropan, ethoxyliertes Trimethylolpropan, propoxyliertes Trimethylolpropan, propoxyliertes Glycerin, ethoxyliertes Glycerin, Glycerin, Pentaerythrit, Rizinusöl, monofunktionelle Alkohole wie z.B. Cyclohexanol, 2-Ethylhexanol, Polyethylenoxide, Polypropylenoxide, Polyethylen/propylenoxidmisch- bzw. Blockcopolymere und Mischungen dieser und/oder anderer Alkohole.

Ein geeigneter Polyesterrohstoff ist auch Caprolacton, der anteilig oder auch als Hauptkomponente zur Herstellung der Polyester b1) eingesetzt werden kann.

Bevorzugte Polyesterrohstoffe sind Adipinsäure, Phthalsäureanhydrid, Tetrahydrophthalsäureanhydrid, Isophthalsäure, Terephthalsäure, Glutarsäure, Sojaölfettsäure, Benzoesäure, 2-Ethylhexansäure, 1,4-Butandiol, Neopentylglykol, 1,2-Propylenglykol, Ethylenglykol, Diethylenglykol,1,6-Hexandiol, Trimethylolpropan, Pentaerythrit, Rizinusöl, Glycerin und deren Mischungen.

Besonders bevorzugt sind Polyester auf Basis von Dicarbonsäuren, die zu mindestens 60 Gew. -%, besonders bevorzugt zu 100 Gew.-% aromatischer Natur sind, insbesondere Phthalsäureanhydrid, Isophthalsäure, Terephthalsäure.

Geeignete niedermolekulare Polyole b2) sind z.B. kurzkettige, d.h. 2 bis 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxy-propylester), Trimethylolethan, Trimethylolpropan oder Glycerin.

Bevorzugte niedermolekulare Polyole b2) sind Diethylenglykol, Ethylenglykol, Butandiol, Dipropylenglykol, 1,2-Propandiol, Neopentylglykol, Trimethylpentandiol, Cyclohexandiol, 1,2 und 1,4-Cyclohexandimethanol, Trimethylolpropan und Glycerin.

Geeignete Polyole b3) sind hydroxyterminierte Polycarbonate, die durch Umsetzung von Diolen oder auch Lacton-modifizierten Diolen oder auch Bisphenolen, wie z.B. Bisphenol A, mit Phosgen oder Kohlensäurediestern wie Diphenylcarbonat oder Dimethylcarbonat zugänglich sind. Beispielhaft seien genannt die polymeren Carbonate des 1,6-Hexandiols, 1,4- Butandiols, TCD-Diols, 1,4-Cyclohexan-dimethanols, 3-Methyl-1,5-Pentandiols, Pentandiols, Dimerdiols, Dodecandiols, Triethylenglykols, Poly-THF 650 bzw. deren Mischungen, sowie die Carbonate von Umsetzungsprodukten der genannten Diole mit $\varepsilon$-Caprolacton im molaren Verhältnis von 1 bis 0,1.

Bevorzugt sind vorstehend genannte Polycarbonatdiole eines zahlenmittleren Molekulargewichts von 600 bis 3000 g/mol und Carbonate von Umsetzungsprodukten des 1,6-Hexandiols mit $\varepsilon$-Caprolacton im molaren Verhältnis von 1 bis 0,33.

Als Polyol b4) geeignete C2- und/oder C3-Polyether sind oligomere bzw. polymere Umsetzungsprodukte von Ethylenoxid und/oder in Form von Homopolymeren, Copolymeren oder auch Block(co)polymeren.

Die zahlenmittleren Molekulargewichte liegen bevorzugt im Bereich von 500 bis 6000 g/mol. Die Funktionalität der Polyether beträgt üblicherweise 1 bis 4, bevorzugt 2 bis 3 und besonders bevorzugt 2.

Als Startermoleküle bzw. Startermolekülmischung kommen die bekannten Alkohole, Aminoalkohole und Amine nach dem Stand der Technik in Frage, wie beschrieben in Ullmanns Encyklopädie der technischen Chemie, Band 19, 4 Auflage, Verlag Chemie GmbH, Weinheim, 1980, s. 31 ff..

Als Polyol b5) geeignete C4-Polyether sind oligomere bzw. polymere Umsetzungsprodukte von Tetrahydrofuran in Form von Homopolymeren, ggf. auch Copolymeren oder Block(co)polymeren mit anderen Monomeren.

Die zahlenmittleren Molekulargewichte liegen bevorzugt im Bereich von 800 bis 4000 g/mol. Die Funktionalität der Polyether beträgt üblicherweise 1 bis 4, bevorzugt 2 bis 3 und besonders bevorzugt 2.

Als Startermoleküle bzw. Startermolekülmischung kommen z.B. die bekannten Alkohole, Aminoalkohole und Amine nach dem Stand der Technik in Frage, wie z.B. beschrieben in Ullmanns Encyklopädie der technischen Chemie, Band 19, 4 Auflage, Verlag Chemie GmbH, Weinheim, 1980, s. 31 ff.

Als Polyether b4) bzw. b5) sind difunktionelle Polyether auf Propylenoxid- und/oder Tetrahydrofuranbasis mit zahlenmittleren Molekulargewichten von 1000 bis 2000 g /mol bevorzugt.

Als weitere Polyole können hydroxyterminierte Polyamidalkohole, hydroxyterminierte Polyolefine auf Ethylen, Propylen, Isopren und/oder Butadienbasis und hydroxyterminierte Polyacrylatdiole, z.B. Tegomer® BD 1000 (Tego GmbH, Essen, DE) eingesetzt werden.

Besonders bevorzugt ist auch der Einsatz einer Mischung aus einem definierten niedermolekularen Polyol b2) und einem oder zwei oligomeren bzw. polymeren Polyolen auf Polyester-, Polycarbonat- und/oder C3- bzw. C4-Polyetherbasis.

Die Verbindungen der Komponente b) werden im erfindungsgemäßen Verfahren typischerweise in Mengen von 3 bis 75 Gew.-%, bevorzugt 8 bis 69 Gew.-% und besonders bevorzugt 10 bis 60 Gew. -% bezogen auf die harn-

stoffgruppenhaltigen, hydroxyfunktionellen Polyurethane eingesetzt.

Geeignete Komponenten c) sind beliebige organische Verbindungen, die mindestens zwei freie Isocyanatgruppen pro Molekül aufweisen.

Geeignet sind Diisocyanate der allgemeinen Formel $X(NCO)_2$, wobei X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht.

Beispiele derartiger Diisocyanate sind Tetramethylendiisocyanat, Methylpentamethylendiisocyanat, Hexamethylendiisocyanat, Dodecamethylendiisocyanat, 1,4-Diisocyanatocyclohexan, 1-Isocyanato-3,3,5-trimethyl-5-isocyanatomethylcyclohexan, 4,4'-Diisocyanatodicyclohexylmethan, 4,4'-Diisocyanatodicyclohexylpropan-(2,2), 1,4-Diisocyanatobenzol, 2,4-Diisocyanatotoluol, 2,6-Diisocyanatotoluol, 4,4'-Diisocyanatodiphenylmethan, 2,2'- und 2,4'-Diisocyanatodiphenylmethan, p-Xylylendiisocyanat, p-Isopropylidendiisocyanat, sowie aus diesen Verbindungen bestehende Gemische.

Ebenfalls möglich ist der Einsatz von monomeren Triisocyanaten wie 4-Isocyanatomethyl-1,8-octandiisocyanat (Nonantriisocyanat).

Neben den vorgenannten monomeren Isocyanaten sind auch die an sich bekannten höhermolekularen Folgeprodukte dieser monomeren Isocyanate mit Uretdion-, Isocyanurat-, Urethan-, Allophanat-, Biuret-, Carbodiimid-, Iminooxadiazindion- und/oder Oxadiazintrionstruktur, wie sie in an sich bekannter Weise durch Modifizierung einfacher aliphatischer, cycloaliphatischer, araliphatischer und/oder aromatischer Diisocyanate erhältlich sind, geeignet.

Bevorzugt basieren die in c) eingesetzten Polyisocyanate auf Hexamethylendiisocyanat, Isophorondiisocyanat, 4,4'-Diisocyanatodicyclohexylmethan, 1-Methyl-2,4-diisocyanatocyclohexan, 1-Methyl-2,6-diisocyanatocyclohexan, 2,4-Diisocyanatotoluol und/oder 2,6-Diisocyanatotoluol.

Besonders bevorzugt wird in c) eine Polyisocyanatkomponente eingesetzt, die mindestens ein Polyisocyanat mit durchschnittlich mehr als 2 Isocyanatgruppen enthält und ferner monomere Diisocyanate enthalten kann.

Bevorzugte dieser Polyisocyanatkomponenten c) sind solche, die aus

c1) 0 bis 95 Gew. -% mindestens eines difunktionellen Isocyanates aus der Gruppe Hexamethylendiisocyanat, Isophorondiisocyanat, 4,4'-Diisocyanatodicyclohexylmethan, 1-Methyl-2,4-diisocyanatocyclohexan, 1-Methyl-2,6-diisocyanatocyclohexan, 2,4-Diisocyanatotoluol und/oder 2,6-Diisocyanatotoluol und

c2) 5 bis 100 Gew. -% mindestens eines Polyisocyanates mit durchschnittlich mehr als 2 Isocyanatgruppen mit Uretdion-, Biuret-, Isocyanurat- , Allophanat-, Carbodiimid-, Iminooxadiazindion-, Oxadiazintrion-, Urethan- und/ oder Harnstoffstruktureinheiten bestehen.

Besonders bevorzugt besteht die in c) eingesetzte Polyisocyanatkomponente aus

c1) 27 bis 73 Gew. -% mindestens eines difunktionellen Isocyanates ausgewählt aus der Gruppe Hexamethylendiisocyanat, Isophorondiisocyanat, 2,4-Diisocyanatotoluol und/oder 2,6-Diisocyanatotoluol und 4,4'Diisocyanatodicyclohexylmethan und

c2) 73 bis 27 Gew. -% mindestens eines Polyisocyanates mit durchschnittlich mehr als 2 Isocyanatgruppen mit Uretdion-, Biuret-, Isocyanurat- , Allophanat-, Carbodiimid-, Iminooxadiazindion-, Oxadiazintrion-, Urethan- und/ oder Harnstoffstruktureinheiten auf Basis von Hexamethylendiisocyanat.

Die Verbindungen der Komponente c) werden im erfindungsgemäßen Verfahren typischerweise in Mengen von 19 bis 70 Gew.-%, bevorzugt 22 bis 65 Gew.-% und besonders bevorzugt 24 bis 60 Gew. -% bezogen auf die harnstoffguppenhaltigen, hydroxyfunktionellen Polyurethane eingesetzt.

Geeignete, ggf. mit zu verwendende Verbindungen der Komponente d) können sein: weitere hydrophile Komponenten wie mono- oder dihydroxyfunktionelle Polyether wie mono- bzw. dihydroxyfunktionelle Ethylenoxidpolyether, mono- bzw. dihydroxyfunktionelle Propylenoxid/Ethylenoxidcopolyether bzw. mono- bzw. dihydroxyfunktionelle Propylenoxid/Ethylenoxidblockpolyether des Molekulargewichtsbereichs 200 bis 3000 g/mol, Hydrazidverbindungen wie Hydrazin oder Adipinsäuredihydrazid, Diamine wie Ethylendiamin, 1,3-Propylendiamin, 1,6-Hexamethylendiamin, Isophorondiamin, 1,3-, 1,4-Phenylendiamin, 4,4'-Diphenylmethandiamin, 4,4'-Dicyclohexylmethandiamin, aminofunktionelle Polyethylenoxide oder Polypropylenoxide, die unter dem Namen Jeffamin®, D-Reihe (Fa. Huntsman Corp. Europe, Belgien) erhältlich sind und auch Triamine wie Diethylentriamin, Monoamine, wie Butylamin, Ethylamin und Amine der Jeffamin® M-Reihe (Huntsman Corp. Europe, Belgien), aminofunktionelle Polyethylenoxide und Polypropylenoxide, ebenfalls geeignet, allerdings weniger bevorzugt sind monofunktionelle Alkohole wie Ethanol, Propanol, Isopropanol, Butanol, sec-Butanol, tert.-Butanol, Pentanol, Hexanol, Octanol, Butylglykol, Butyldiglykol, Methylglykol, Methyldiglykol, Ethylglykol, Ethyldiglykol, Methoxyglykol, Methoxydiglykol, Methoxytriglykol, Methoxypropanol, Cyclohexanol, 2-Ethylhexanol, ebenfalls geeignet sein können C9-C22- Alkohole, die ggf. auch Doppelbindungen enthalten können wie Stearylalkohol, Oleylalkohol; Vinylalkohol, Hydroxyethyl(meth)acrylat, Hydroxypropyl(meth)acrylat, Hydroxybutyl(meth)acrylat; Thiole und andere NCO-reaktive Verbindungen und Mischungen der beispielhaft genannten Komponenten d) und auch anderer Verbindungen.

Falls Komponente d) eingesetzt wird, dann bevorzugt die vorstehend beispielhaft genannten hydrophilen Verbindungen auf Polyetherbasis.

Die Verbindungen der Komponente d) werden in Mengen von typischerweise 0 bis 25 Gew.-%, bevorzugt 0 bis 10 Gew.-%, besonders bevorzugt 0 bis 3,5 Gew. -% bezogen auf die harnstoffguppenhaltigen, hydroxyfunktionellen Polyurethane eingesetzt.

Grundsätzlich geeignete Verbindungen der Komponente e) sind Aminoalkohole mit ausschließlich einer primären bzw. ausschließlich einer sekundären Aminogruppe und mindestens einer Hydroxylgruppe, wie Diethanolamin, N-Methylethanolamin, N-Ethylethanolamin, N-Propylethanolamin, Diisopropanolamin, N-Methylisopropanolamin, N-Ethylisopropanolamin, N-Propylisopropanolamin, N-Hydroxyethylaminocyclohexan, N-Hydroxyethylaminobenzol, Umsetzungsprodukte von Monoepoxiden wie z.B Cardura® E10 [Glycidylester der Versaticsäure, Hexion] mit primären oder sekundären Monoaminen wie Ammoniak, Ethylamin, Propylamin, Butylamin, Hexylamin, Cyclohexylamin oder Aminoalkoholen mit primären Aminogruppen wie Ethanolamin, Isopropanolamin, Propanolamin, Umsetzungsprodukte von ungesättigten Verbindungen wie Hydroxyethylacrylat, Hydroxypropylacrylat, Hydroxybutylacrylat Hydroxyethylmethacrylat, Hydroxypropylmethacrylat oder Hydroxybutylmethacrylat im Sinne einer Michaeladdition mit primären oder sekundären Aminen oder mit Aminoalkoholen mit primären Aminogruppen wie Ammoniak, Ethylamin, Propylamin, Butylamin, Hexylamin, Cyclohexylamin, Ethanolamin, Isopropanolamin, Propanolamin, wobei Komponente e) zu mindestens 60 Gew.- % aus Aminoalkoholen mit sekundären Amingruppen besteht.

Bevorzugt werden in Komponente e) mindestens 80 Gew.-% Aminoalkohole mit einer sekundären Aminogruppe und 1 bis 3 Hydroxylgruppen eingesetzt.

Besonders bevorzugt werden in Komponente e) ausschließlich, d.h. zu 100 Gew.-% Aminoalkohole mit ausschließlich einer sekundären Aminogruppe und 1 oder 2 Hydroxylgruppen, wie Diethanolamin, N-Methylethanolamin, N-Ethylethanolamin, Diisopropanolamin, N-Methylisopropanolamin, N-Ethylisopropanolamin eingesetzt.

Die Verbindungen der Komponente e) werden typischerweise in Mengen von 0,7 bis 1,2, bevorzugt von 0,93 bis 1,03 und besonders bevorzugt in Mengen von 0,96 bis 1,0 Equivalenten an Aminogruppen der Verbindungen der Komponente e) zu Equivalenten an Isocyanatgruppen des Prepolymeren, erhalten durch Umsetzung der Komponenten a), b), c) und ggf. d) eingesetzt, um eine möglichst gezielte Umsetzung der Aminogruppen mit den Isocyanatgruppen unter Ausbildung von Harnstoffstrukturen zu erhalten.

Die erfindungswesentliche Umsetzung des NCO-funktionellen Zwischenproduktes aus den Komponenten a), b), c) und ggf. d) mit der Hydroxyaminkomponente e) führt zur Ausbildung von Harnstoffstrukturen.

Zur Herstellung der erfindungswesentlichen harnstoffguppenhaltigen, hydroxyfunktionellen Polyurethane bzw. deren Lösungen, werden die Bestandteile a), b), c) und ggf. d) in einer ein- oder ggf. auch mehrstufigen Synthese, ggf. unter Mitverwendung von Katalysator(en) zu einem isocyanatfunktionellen Zwischenprodukt umgesetzt, gefolgt von der Umsetzung mit der Komponente e) bis der gewünschte Isocyanatgehalt, in der Regel < 0,5, vorzugsweise < 0,1 Gew.-%, erreicht ist. Im Falle der Herstellung der Lösungen erfolgt anschließend das Lösen der harnstoffguppenhaltigen, hydroxyfunktionellen Polyurethane in oder mit Wasser, wobei eine ausreichende Menge an geeignetem Neutralisationsmittel zu jedem beliebigen Zeitpunkt vor oder parallel zum Lösen zugegeben wird, und wobei ggf. mit verwendetes Lösemittel ganz oder teilweise wieder abdestilliert wird.

Die isocyanatfunktionelle Zwischenstufe wird entweder in Substanz bei 20 bis 170°C oder in organischer Lösung bei Temperaturen von 20 bis 200, bevorzugt 40 bis 90°C durch Reaktion der Komponenten a), b), c) und ggf. d) bis der theoretische bzw. der gewünschte Isocyanatgehalt annähernd erreicht oder leicht unterschritten ist, hergestellt, gefolgt von der Umsetzung dieses isocyanatfunktionellen Zwischenproduktes mit der Komponente e) bevorzugt derart, dass Komponente e) ggf. verdünnt mit einem Lösemittel bei 0 bis 50°C vorgelegt wird und das ggf. gelöste isocyanatfunktionelle Zwischenprodukt so zudosiert wird, dass die exotherme Reaktion jederzeit kontrollierbar bleibt. Die Menge an Komponente e) wird dabei bevorzugt so bemessen, dass je freie Isocyanatgruppe des Zwischenproduktes eine Aminogruppe eines Aminoalkohols eingesetzt wird. Die Reaktion wird dann solange durchgeführt, bis der Isocyanatgehalt des Reaktionsprodukts den gewünschten Wert erreicht hat, vorzugsweise < 0,1 Gew.-%, besonders bevorzugt 0 Gew.-%.

Die zur Überführung der Säuregruppen der Verbindungen der Komponente a) notwendigen Neutralisationsmittel können bereits bei der Herstellung des isocyanatfunktionellen Zwischenproduktes eingesetzt werden, wenn die Neutralisationsmittel keine isocyanatfunktionellen Gruppen aufweisen. Grundsätzlich dafür geeignet sind dafür alle Amine die keine primäre oder sekundäre Aminogruppe und keine Hydroxylgruppe enthalten, wie Triethylamin, N-Methylmorpholin, Dimethylcyclohexylamin, Ethyldiisopropylamin, Dimethylisopropylamin bzw. Mischungen dieser und auch anderer entsprechender Amine.

Dabei ist ggf. darauf zu achten, dass zu hohe Mengen an solchen Neutralisationsmitteln während der Umsetzung zu unerwünschten Nebenreaktionen, wie einer übermäßigen Trimerisierung der Verbindungen der Komponente c) führen können. Bevorzugt werden die beispielhaft genannten Neutralisationsmittel deshalb erst nach der Herstellung des isocyanatfunktionellen Zwischenproduktes zugegeben.

Besonders bevorzugt ist die Zugabe der Neutralisationsmittel nach der Umsetzung der isocyanatfunktionellen Zwischenprodukte mit der Aminoalkohol-Komponente e), entweder vor dem Lösen mit/in Wasser oder parallel dazu, z.B. durch Verwendung einer Wasser-/Neutralisationsmittelmischung für den Löseschritt.

Hier können neben den bereits genannten Aminen auch andere Basen, die z.B. frei Amino- und/oder Hydroxylgruppen enthalten, eingesetzt werden, wie z.B. Ammoniak, 2-Aminoethanol, Aminopropanole, 3-Amino-1,2-propandiol, Aminobutanole, 1,3-Diamino-2-propanol, Bis-(2-hydroxypropyl)-amin, Triethanolamin, N-Methyl-diethanolamin, N-Methyldiisopropanolamin, Dimethylethanolamin, Diethylethanolamin, Dimethylisopropanolamin, Morpholin, 2-Aminomethyl-2-Methylpropanol und auch Natriumhydroxid, Lithiumhydroxid, Bariumhydroxid, Kaliumhydroxid und auch Mischungen der genannten und ggf. auch anderer Neutralisationsmittel.

Bevorzugte Neutralisationsmittel sind Ammoniak, Triethylamin, Dimethylethanolamin, Methyldiethanolamin, Triethanolamin, 2-Aminomethyl-2-Methylpropanol, Dimethylcyclohexylamin, Ethyldiisopropylamin, Lithiumhydroxid, Natriumhydroxid, Kaliumhydroxid und deren Mischungen.

Insgesamt wird soviel Neutralisationsmittel zugegeben, dass eine optisch klare bis schwach opake wässrige Lösung erhalten wird. Üblicherweise liegt der Neutralisationsgrad bezogen auf eingebaute Säuregruppen bei mindestens 25 mol%, bevorzugt mindestens 50 mol% und maximal bei 150 mol%. Bei einem Neutralisationsgrad von über 100 mol% liegt dann neben 100% ionischen Salzgruppen noch zusätzlich freies Neutralisationsmittel vor. Besonders bevorzugt ist ein Neutralisationsgrad von 50 bis 100 mol%.

Es können auch Mischungen bzw. Kombinationen unterschiedlicher Neutralisationsmittel eingesetzt werden.

Im Falle von kationischen wässrigen Polyurethanlösungen werden die eingebauten tertiären Aminogruppen mit Säure in die entsprechenden Salze überführt. Grundsätzlich sind dafür alle Säuren geeignet, bevorzugt sind Phosphorsäure, Milchsäure und Essigsäure.

Geeignete Katalysatoren zur Herstellung der erfindungswesentlichen harnstoffguppenhaltigen, hydroxyfunktionellen Polyurethane sind z.B. die in der Isocyanatchemie bekannten Katalysatoren, wie tertiäre Amine, Zinn-, Zink-, Titan-, Zirkon-, Molybdän- oder Wismuthverbindungen, insbesondere Triethylamin, 1,4-Diazabicyclo-[2,2,2]-octan, Zinndioktoat oder Dibutylzinndilaurat. Die Katalysatoren können in Mengen von 0 bis 2 Gew.-%, vorzugsweise von 0 bis 0,5 Gew.-% bezogen auf die Gesamtmenge aller zur Polyurethanherstellung eingesetzten Verbindungen eingesetzt werden.

Das Lösen der harnstoffgruppenhaltigen, hydroxylfunktionellen Polyurethane in Wasser erfolgt entweder durch Zugabe von ggf. erwärmtem Wasser unter Rühren zu dem gegebenenfalls in organischen Lösemitteln gelösten Polyurethan oder aber durch Überführung des gegebenenfalls organische Lösemittel enthaltenden Polyurethans unter Rühren in eine wässrige Vorlage.

Geeignete Lösemittel sind z.B. Aceton, Methylethylketon, Methylisobutylketon, N-Methylpyrrolidon, N-Ethylpyrrolidon, Butylglykol, Butyldiglykol, Ethylenglykoldimethylether, Ethylenglykol, Propylenglykol, Dipropylenglykol, Methoxypropanol, Methoxypropylacetat und Mischungen der genannten und auch anderer Lösemittel. Anteilig können auch hydrophobe Lösemittel mitverwendet werden wie aliphatische und/oder aromatische Kohlenwasserstoffe bzw. Kohlenwasserstoffgemische wie Solvent Naphta, Toluol u.a.. Bevorzugt wird Aceton als Lösemittel verwendet.

Die erfindungsgemäßen wässrigen Polyurethanlösungen enthalten typischerweise weniger als 20 Gew.-%, bevorzugt weniger als 5 Gew.-% organische Löse-, Dispergier- bzw. Verdünnungsmittel. Besonders bevorzugt sind praktisch lösemittelfrei wässrige Lösungen, im Allgemeinen enthalten diese dann weniger als 1 Gew.-% Lösemittel.

Die zur Herstellung eingesetzten organischen Lösemittel, insbesondere das bevorzugte Aceton, sind häufig nicht in der Lage die erfindungsgemäßen Polyurethane zu lösen. In der Regel erhält man als Zwischenstufe eine nichtwässrige Dispersion des erfindungsgemäßen Polyurethans in dem organischen Medium, insbesondere in Aceton. Dies hat den Vorteil, dass die Viskosität vor dem Dispergierschritt besonders niedrig ist und die Dispergierung vereinfacht wird.

Die Herstellung der erfindungsgemäßen wässrigen Polyurethanlösungen über eine nichtwässrige, organische Dispersion, vorzugsweise in Aceton, als Zwischenstufe ist ein bevorzugter Herstellprozess für die erfindungsgemäßen wässrigen Polyurethanlösungen.

Nach dem Lösen in/mit Wasser wird das gegebenenfalls vorhandene Lösemittel teilweise, bevorzugt ganz, z.B. durch Anlegen eines leichten Vakuums oder durch Ausblasen mit einem Stickstoffstrom abdestilliert. Dabei ist auch möglich, überschüssiges Wasser mit ab zu destillieren und den Feststoffgehalt der Lösungen weiter zu erhöhen.

Vor, während oder nach dem Löseschritte f) können gegebenenfalls Additive, Hilfsmittel, Lösemittel oder nochmals Neutralisationsmittel zugesetzt werden, wie oberflächenaktive Substanzen, Emulgatoren, Stabilisatoren, Antiabsetzmittel, UV-Stabilisatoren, Katalysatoren für die Vernetzungsreaktion, Photoinitiatoren, Initiatoren, Entschäumer, Antioxidantien, Hautverhinderungsmittel, Verlaufshilfsmittel, Verdicker und/oder Bakterizide.

Man erhält so optisch klare, ggf. auch leicht opake wässrige Lösungen von hydroxyfunktionellen, harnstoffgruppenhaltigen Polyurethanen mit hohen Feststoffgehalten, geringen bis keinen Anteilen an organischen Lösemitteln, ausgezeichneter Hydrolysestabilität auch bei längerer Lagerung, Verdünnungs- und Verarbeitungsverhalten wie organisch gelöste Polymere, welche für vielfältige Anwendungsmöglichkeiten hervorragend geeignet sind. Aufgrund der hohen Feststoffgehalte und des Lösungscharakters ist es z.B. möglich, in einem Arbeitsgang Filme mit besonders hoher störungsfreier, glatter und sehr gut verlaufender Schichtstärke bei Lack- oder Klebstoffen zu erhalten, da im Gegensatz zur Verwendung von Dispersionen keine Koaleszenz von Dispersionsteilchen erforderlich ist und der Feststoffgehalt höher als bei Dispersionen üblich ist.

Die erfindungswesentlichen wässrigen Polyurethan-Lösungen weisen Feststoffgehalte von 55 bis 75 Gew. % auf.

Die erfindungswesentlichen harnstoffguppenhaltigen, hydroxyfunktionellen Polyurethane weisen gemäß der nachstehenden Formel rechnerisch ermittelte Molekulargewichte von 750 bis 30000 g/Mol, vorzugsweise von 850 bis 7500 g/mol und besonders bevorzugt von 1000 bis 3000 g/Mol auf.

Das Molekulargewicht lässt sich rechnerisch ermitteln gemäß der Formel:

$$MG = Masse\ Ansatz\ /\ (Mol\ Isocyanate\ c)\ +\ Mol\ Hydrophilierungsmittel\ a)\ +\ Mol\ Polyole\ b)\ +$$

$$Mol\ Aminoalkohole\ d)\ +\ Mol\ sonstige\ Verbindungen\ e))\ -Equivalente\ Isocyanatgruppen\ =\ g/mol.$$

Bevorzugt weisen die erfindungswesentlichen harnstoffguppenhaltigen, hydroxyfunktionellen Polyurethane bzw. deren Lösungen Hydroxylgruppengehalte von 2,5 bis 9 Gew. -% besonders bevorzugt 3 bis 7,5 Gew. -% bezogen auf das Polyurethan auf, wobei die OH-Gruppen primärer oder/und sekundärer Natur sein können. Bevorzugt sind primäre Hydroxylgruppen.

Die Säurezahl der erfindungswesentlichen harnstoffguppenhaltigen, hydroxyfunktionellen Polyurethane bzw. deren Lösungen beträgt bevorzugt 2 bis 45 mg KOH/g, bevorzugt 4 bis 28 mg KOH/g und besonders bevorzugt 6 bis 17 mg KOH/g bezogen auf das Polyurethan.

Die erfindungswesentlichen harnstoffguppenhaltigen, hydroxyfunktionellen Polyurethane bzw. deren Lösungen enthalten über die Aminogruppe der Komponente e) erzeugte Harnstoffgruppengehalte von 3 bis 20 Gew.-%, bevorzugt 5 bis 17 Gew.-% und ganz besonders bevorzugt 8 bis 14 Gew. -% bezogen auf die Polyurethane, wobei weitere Harnstoffgruppen, z.B. durch Einsatz harnstoffgruppenhaltiger Polyisocyanatkomponenten c) und/oder den Einsatz von Aminen als Komponente d) und/oder den Einsatz von aminofunktionellen Hydrophilierungsmittel a) in die wässrigen Lösungen der Polyurethane bzw. in die Polyurethane selbst einbracht werden können.

Bei den erfindungswesentlichen Lösungen der harnstoffguppenhaltigen, hydroxyfunktionellen Polyurethane handelt sich um wässrige Lösungen mit einer mittleren Teilchengröße von < 200 nm, bevorzugt um klare bzw. opake Lösungen mit einer mittleren Teilchengröße von < 50 nm und besonders bevorzugt um optisch klare Lösungen, für die sich in der Regel keine Teilchengrößen mehr bestimmen lassen.

Geeignete Vernetzerharze der Komponente B) sind z.B. Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie beispielhaft in "Lackkunstharze", H. Wagner, H.F. Sarx, Carl Hanser Verlag München, 1971 beschrieben sind. Geeignete wasserverdünnbare bzw. wasserdispergierbare Melamin- bzw. Harnstoff-Formaldehyd-Kondensationsprodukte werden z.B. bei D.H. Solomon, The Chemistry of Organic Filmformers, S. 235 ff, John Wiley Sons, Inc., New York 1967 , beschrieben. Andere vernetzende Aminoplaste die ebenfalls geeignet sein können, werden in "Methoden der organischen Chemie" (Houben-Weyl), Bd. 14/2, Teil 2, 4. Auflage, Georg Thieme Verlag, Stuttgart, 1963, S. 319 ff, beschrieben. Eine umfassende Beschreibung prinzipiell geeigneter Amino- und Amidvernetzerharze, sowie eine Übersicht über Lieferanten und Produktnamen geben D. Stoye, W. Freitag in "Lackharze, Chemie, Eigenschaften und Anwendungen", Carl Hanser Verlag München Wien, 1996, S. 104 ff.

In einer bevorzugten Ausführungsform wird ausschließlich mindestens ein Amino- bzw. Harnstoffvernetzerharz eingesetzt.

Ebenfalls gut geeignete Vernetzerharze der Komponente B) sind blockierte Polyisocyanate, beispielsweise auf Basis von Hexamethylendiisocyanat, Bis-(4-isocyanatocyclohexan)-methan, 1,3-Diisocyanatobenzol, Tetramethylendiisocyanat, Methylpentamethylen-diisocyanat, Dodecamethylendiisocyanat, 1,4-Diisocyanatocyclohexan, 1-Isocyanato-3,3,5-trimethyl-5-isocyanatomethylcyclohexan, 4,4'-Diisocyanatodicyclohexylmethan, 4,4'-Diisocyanatodicyclohexylpropan-(2,2), 1,4-Diisocyanatobenzol, 1-Methyl-2,4-diisocyanatocyclohexan, 1-Methyl-2,6-diisocyanatocyclohexan, 2,4-Diisocyanatotoluol, 2,6-Diisocyanatotoluol, 4,4'-Diisocyanato-diphenylmethan, 2,2'- und 2,4'-Diisocyanatodiphenylmethan, p-Xylylendiisocyanat, p-Isopropylidendiisocyanat, 4-Isocyanatomethyl-1,8-octandiisocyanat, p-Xylylendiisocyanat und $\alpha,\alpha,\alpha',\alpha'$-Tetramethyl-m- oder p-Xylylendiisocyanat, sowie aus diesen und auch anderen Isocyanaten Verbindungen bestehende Gemische.

Es ist selbstverständlich auch möglich und in aller Regel auch vorteilhaft, auf Basis der beispielhaft genannten Polyisocyanate die in der Polyurethanchemie an sich bekannten höherfunktionellen Polyisocyanate mit Uretdion-, Carbodiimid-, Allophanat-, Isocyanurat-, Urethan-, Iminooxadiazindion-, Oxadiazintrion-, und/oder Biuretgruppen als blok-

kierte Vernetzerharze in Komponente B) einzusetzen.

Geeignete Blockierungsmittel für die Polyisocyanatvemetzer können sein: Monoalkohole wie Methanol, Ethanol, Butanol, Hexanol, Benzylalkohol, Oxime wie Acetoxim, Methylethylketoxim, Lactame wie Caprolactam, Phenole, CH-acide Verbindungen wie Acetessigester oder Malonsäureester wie Diethylmalonat, Dimethylpyrazol, Amine wie tert. Butylbenzylamin, Triazol, Dimethyltriazol, Dicyclohexylamin, Diisopropylamin. Es können auch Mischungen der genannten und auch anderer Blockierungsmittel eingesetzt werden.

Bevorzugte Blockierungsmittel sind Dimethylpyrazol, Butanonoxim, Caprolactam, Malonsäureester, tert. Butylbenzylamin, Triazol und Mischungen der genannten, gegebenenfalls auch mit weiteren Blockierungsmitteln.

Besonders bevorzugt besteht das Blockierungsmittel zu mindestens 50% aus Dimethylpyrazol.

In einer bevorzugten Ausführungsform wird ausschließlich mindestens ein blockierte NCO-Gruppen aufweisendes Vernetzerharz eingesetzt.

Die blockierte Isocyanatgruppen enthaltenden Polyisocyanatvemetzer B) können neben anderen Aufbaukomponenten wie z.B. Diolen, Triole, Polyesterpolyolen, Polyetherpolyolen, Polycarbonatpolyolen und Diaminen auch hydrophilierende Komponenten, beispielsweise der unter Beschreibung der hydrophilierenden Komponente d) genannten nichtionischen Art auf Basis mono- oder dihydroxyfunktioneller Polyether wie mono- bzw. dihydroxyfunktionelle Ethylenoxidpolyether, mono- bzw. -dihydroxyfunktionelle Propylenoxid/Ethylenoxidcopolyether bzw. mono- bzw. dihydroxyfunktionelle Propylenoxid/Ethylenoxidblockpolyether des Molekulargewichtsbereichs 200 bis 3000 g/mol, oder/und ionische Hydrophilierungsmittel mit mindestens einer isocyanatreaktiven Gruppe, wie z.B. primäre oder sekundäre Aminogruppen und / oder Hydroxylgruppen sowie mindestens einer Säuregruppe wie z.B. Carboxyl- oder Sulfonsäuregruppe und/oder deren durch Zugabe von Neutralisationsmitteln gebildeten Salze, enthalten.

Ebenfalls geeignet sind die bereits unter a) genannten ionischen Hydrophilierungsmittel wie Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Dimethylolessigsäure, 2,2-Dimethylolpentansäure, Dihydroxybernsteinsäure, Hydroxypivalinsäure, N-(2-Aminoethyl)-alanin, 2-(2-Amino-ethylamino)-ethansulfonsäure, Ethylendiaminpropyl- oder butylsulfonsäure, 1,2- oder 1,3-Propylendiamin-ethylsulfonsäure, Äpfelsäure, Zitronensäure, Glykolsäure, Milchsäure, Glycin, Alanin, Taurin, Lysin, 3,5-Diaminobenzoesäure, 6-Aminohexansäure, 11- Aminoundecansäure, Aminoessigsäure, ein Additionsprodukt von IPDA, Hexmethylendiamin oder anderer Diamine und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und $NaHSO_3$, z.B. beschrieben in der DE-A 2 446 440 (Seite 5-9, Formel I-III) bzw. die Salze der beschriebenen Hydrophilierungsmittel, sowie Mischungen der genannten und ggf. auch anderer Hydrophilierungsmittel.

Bevorzugte ionische oder potentielle ionische Verbindungen sind solche, die über Carboxy- oder Carboxylat- und/oder Sulfonatgruppen verfügen.

Besonders bevorzugte Hydrophilierungsmittel sind 2-(2-Amino-ethylamino-) ethansulfonsäure, das Additionsproduktes von IPDA und Acrylsäure (EP-A 0 916 647, Beispiel 1), Dimethylolpropionsäure und Hydroxypivalinsäure.

Die freien Säuregruppen stellen "potentiell ionischen" Gruppen dar, während es sich bei den durch Neutralisation mit Neutralisationsmitteln erhaltenen salzartigen Gruppen, Carboxylat — bzw. Sulfonatgruppen, um ionische Gruppen handelt.

Die vorgenannten für B) geeigneten Polyisocyanate weisen einen NCO-Gehalt von 1 bis 50 Gew.- %, bevorzugt von 8 bis 30 Gew.- % bezogen auf den Festgehalt auf. Sie können gegebenenfalls mit einem gegebenenfalls mit Wasser mischbaren, aber gegenüber Isocyanaten inerten Lösungsmittel verdünnt werden.

Es ist auch möglich verschiedene Arten von Vernetzern B) zu kombinieren wie z.B. ein Aminovernetzerharz mit einem blockiertem Polyisocyanat oder zwei oder mehrere Diisocyanate und/oder Polyisocyanate die gegebenenfalls hydrophiliert sein können. Andere Kombinationen der beispielhaft genannten Vernetzer, ggf. auch mit anderen Vernetzern wie z.B. mit Polyisocyanatvemetzem mit freien Isocyanatgruppen sind ebenfalls möglich.

Die Vernetzer B) sind in Kombination mit den erfindungswesentlichen Polyurethanen bzw. deren Lösungen der Komponente A) bei Raumtemperatur und leicht erhöhter Temperatur (z.B. bis 50°C) ausreichend lagerstabil und reagieren nach der Applikation unter erhöhter Temperatur (>70°C, vorzugsweise > 90°C) nach Abspaltung der Blockierungsmittel unter Reaktion der dann freigesetzten Isocyanatgruppen mit den Hydroxylgruppen, z.B. unter Ausbildung vernetzter Beschichtungen ab. Die Vernetzungsdichte lässt sich in weiten Grenzen durch die Festlegung der Menge an reaktiven Gruppen steuern. Übervernetzung durch Zugabe von überschüssigen Vernetzermengen ist ebenso möglich wie eine Untervernetzung durch Einsatz unterschüssiger Vernetzermengen. Damit können dem Fachmann geläufige spezielle Effekte, z.B. bezüglich Haftung, Härte, Beständigkeit der Beschichtung, mit beeinflusst werden.

Wenn für eine Dispergierung bzw. ein Lösen in Wasser ausreichende Mengen an hydrophilen Gruppen in den Vernetzern B) enthalten ist, können die Komponenten A) und B) zu beliebigen Zeitpunkten gegebenenfalls unter Zugabe von Wasser miteinander gemischt werden. Eine die Dispergierung bzw. das Lösen unterstützende Wirkung der Komponente A) für den Vernetzer B) ist dann nicht erforderlich.

Hat die Vernetzerkomponente B) nur wenige oder gar keine hydrophilen Gruppen, dann wird B) entweder in situ in Gegenwart der Komponente A) — vor einem Dispergieren der erfmdungswesentlichen harnstoffguppenhaltigen, hydroxyfunktionellen Polyurethane in Wasser — hergestellt oder den erfindungswesentlichen harnstoffguppenhaltigen, hydroxyfunktionellen Polyurethane der Komponente A) zugemischt, damit eine das Dispergieren bzw. das Lösen ermöglichende Wirkung auf den Vernetzer B) ausgeübt wird.

In Komponente C) können auch Dispersionen eingesetzt werden, die ungesättigte Gruppen enthalten, wie ungesättigte, polymerisierbare Gruppen enthaltende Dispersionen auf Polyester-, Polyurethan-, Polyepoxid-, Polyether-, Polyamid-, Polysiloxan-, Polycarbonat-, Epoxyacrylat-, Polymerisat-, Polyesteracrylat-, Polyurethan-Polyacrylat- und/oder Polyacrylatbasis.

Es können auch Dispersionen z.B. auf Basis von Polyestern, Polyurethanen, Polyepoxiden, Polyethern, Polyamiden, Polyvinylestern, Polyvinylethern, Polysiloxanen, Polycarbonaten, Polymerisaten und/oder Polyacrylaten zugemischt werden, die ebenfalls funktionelle Gruppen wie z.B. Hydroxylgruppen enthalten. Damit können z.B. zwei unterschiedliche hydroxyfunktionelle wässrige Polymere kombiniert werden, z.B. die erfindungsgemäßen, eher niedermolekularen wässrigen Polyurethanlösungen mit relativ hohen Hydroxylgruppengehalten und eher höhermolekulare Polymerdispersionen z.B. auf Polyacrylat- und/oder Polyurethanbasis mit relativ niedrigen Hydroxylgruppengehalten und damit spezielle Effekte z.B. Segmentierung, interpenetrierende Netzwerke usw. erzeugt werden.

Es können auch Dispersionen auf Basis von Polyestern, Polyurethanen, Polyepoxiden, Polyethern, Polyamiden, Polysiloxanen, Polyvinylethem, Polybutadienen, Polyisoprenen, Chlorkautschuken, Polycarbonaten, Polyvinylestern, Polyvinylchloriden, Polymerisaten, Polyacrylaten, Polyurethan-Polyacrylat-, Polyesteracrylat-, Polyetheracrylat-, Alkyd-, Polycarbonat-, Polyepoxid-, Epoxyacrylatbasis zugemischt werden, die keine funktionellen Gruppen aufweisen. Damit kann z.B. der Grad der Vernetzungsdichte reduziert werden, die physikalische Trocknung beeinflusst z.B. beschleunigt werden oder eine Elastifizierung bzw. auch eine Haftungsanpassung vorgenommen werden.

Es ist auch möglich Mischungen der erfindungswesentlichen Polyurethanlösungen mit anderen Dispersionen herzustellen und zu verwenden, die mehr als eine der oben beispielhaft genannten Dispersionen enthalten.

Ebenfalls zu Kombination mit den erfindungsgemäßen Dispersionen geeignet sein können sogenannte Reaktiwerdünner, niedrigviskose Verbindungen mit ungesättigten Gruppen, wie z.B. Hexandiolbisacrylat, Trimethylolpropantrisacrylat, Trimethlolpropandiacrylat, Pentaerythrittetraacrylat, Dipentaerythrithexaacrylat, Diepoxidbisacrylate auf Bisphenol A Basis.

Die erfindungsgemäßen PUR-Systeme sind grundsätzlich zur Beschichtung, Lackierung, Behandlung und Abdichten unterschiedlichster Substrate, insbesondere Metalle, Holz, Keramik, Stein, Beton, Bitumen, Hartfaser, Glas, Porzellan, Kunststoffen, Leder und/ oder Textilien der verschiedensten Art geeignet. Sie sind von Nutzen in oder als Lacke, Beschichtungsmittel, Dichtstoffe, Tinten, Druckfarben, Schlichten, Haftvermittler, Reaktivverdünner.

Es werden damit vorzugsweise Lacke und Beschichtungsmittel erhalten, die sich durch eine sehr gute Verarbeitbarkeit, Robustheit und auch Gefrierstabilität auszeichnen und zu Beschichtungen mit ausgezeichneter Filmoptik und Verlauf, sehr geringer Krateranfälligkeit, guten Beständigkeitseigenschaften und einem ausgeglichenen Härte-/Elastizitätsniveau.

Die Herstellung der erfindungsgemäßen PUR-Systeme erfolgt durch Mischen der Komponenten A) bis C). Der Mischvorgang kann dabei einstufig oder mehrstufig, durch Rühren per Hand oder auch durch Einsatz von technischen Hilfsmitteln bzw. Maschinen erfolgen die eine erhöhte Scherwirkung erzeugen und damit eine besondere homogene Mischung bewirken. Geeignete Mischverfahren bzw. Mischaggregate sind z.B. die Düsenstrahldispergierung, Dispergierung durch Dissolver, durch Zwangsmischaggregate, durch Kugel- oder Perlmühlen, durch Statikmischer usw..

Zur Erzielung besonderer Effekte ist es auch möglich, die erforderlichen Mengen an z.B. in der Lackindustrie üblichen Hilfsmitteln bei der Herstellung der erfindungsgemäßen wässrigen Lösungen bzw. Bindemittelkombinationen zuzusetzen, wie z.B. oberflächenaktive Substanzen, Emulgatoren, Stabilisatoren, Antiabsetzmittel, UV-Stabilisatoren, Slipaddditive, Mattierungsmittel, Katalysatoren für die Vernetzungsreaktion, Entschäumer, Antioxidantien, Antiabsetzmittel, Netzmittel, Weichmacher, Hautverhinderungsmittel, Verlaufshilfsmittel, Verdicker und/oder Bakterizide.

## Beispiele

Die angegebenen Viskositäten wurden gemäß DIN 53229 bei 23°C gemessen.

Die angegebenen NCO-Gehalte wurden gemäß DIN EN ISO 11909 bestimmt.

Die angegebenen Feststoffgehalte wurden gemäß DIN EN ISO 3251 bestimmt.

Eingesetzte Rohstoffe:

**Desmophen® C 2200** (Bayer MaterialScience AG, Leverkusen, Deutschland), aliphatisches Polycarbonatdiol mit Hydroxylendgruppen, Molekulargewicht 2000 g/Mol, OH-Zahl 56 mg KOH/g Substanz

**Desmodur® N3300** (Bayer MaterialScience AG, Leverkusen, Deutschland), lösemittelfreies aliphatisches Polyisocyanat mit Isocyanuratstruktureinheiten auf Basis von Hexamethylendiisocyanat, Equivalentgewicht 195 g/Mol

**Desmodur® N100** (Bayer MaterialScience AG, Leverkusen, Deutschland), lösemittelfreies aliphatisches Polyisocyanat mit Biuretstruktureinheiten auf Basis von Hexamethylendiisocyanat, Equivalentgewicht 190 g/Mol

**Desmophen® 2028** (Bayer MaterialScience AG, Leverkusen, Deutschland), Polyesterdiol auf Basis Adipinsäure, 1,6-Hexandiol und Neopentylglykol mit Hydroxylendgruppen , Molekulargewicht 2000, OH-Zahl 56 mg KOH/g Substanz

**Polyester P200H** (Bayer MaterialScience AG, Leverkusen, Deutschland), Polyesterdiol auf Basis Phthalsäureanhydrid und 1,6-Hexandiol mit Hydroxylendgruppen, Molekulargewicht 2000 g/Mol; OH-Zahl 56 mg KOH/g Substanz

**Polyester P200A** (Bayer MaterialScience AG, Leverkusen, Deutschland), Polyesterdiol auf Basis Phthalsäureanhydrid und Ethylenglykol mit Hydroxylendgruppen, Molekulargewicht 2000 g/Mol; OH-Zahl 56 mg KOH/g Substanz

**Polyester PE400HN** (Bayer MaterialScience AG, Leverkusen, Deutschland), Polyesterdiol auf Basis Adipinsäure, 1,6-Hexandiol und Neopentylglykol mit Hydroxylendgruppen, Molekulargewicht 4000 g/Mol; OH-Zahl 28 mg KOH/g Substanz

**MPEG 750:** Methoxypolyethylenglykol, Molekulargewicht 750 g/Mol (z.B. Pluriol® 750, BASF AG, Deutschland)

**Desmophen® 3600** (Bayer MaterialScience AG, Leverkusen, Deutschland); Polypropylenoxiddiol, mit Hydroxylendgruppen, Molekulargewicht 2000 g/Mol, OH-Zahl 56 mg KOH/g Substanz)

**Polyurethanlösung 1)**

Eine Mischung aus 8,5 g Butandiol, 270 g Polyester P200H und 41,6 g Dimethylolpropionsäure wurde mit 349 g Aceton verdünnt und bei 40°C mit einer Mischung aus 179,8g Isophorondiisocyanat und 315,9 g Desmodur® N 3300 versetzt. Bei 60°C wurde solange gerührt, bis der theoretische NCO-Gehalt von 7,8 % erreicht bzw. leicht unterschritten war. Diese isocyanatfunktionelle Zwischenproduktlösung wurde mit 320 g Aceton verdünnt und dann in ein bei Raumtemperatur vorgelegtes Gemisch aus 162 g N-Methylethanolamin und 148 g Aceton eingerührt und solange bei 50°C gerührt bis der NCO-Gehalt ≤ 0,1 Gew.-% war. Man erhielt eine acetonische Lösung eines hydroxyfunktionellen Polyurethanes. Nach Zugabe von 24,9 g Dimethylethanolamin als Neutralisationsmittel wurde durch Zugabe von 600 g entsalztem Wasser dispergiert und das Aceton abdestilliert.
Man erhielt eine klare wässrige, hydroxyfunktionelle Polyurethanlösung mit einem Gehalt an Harnstoffgruppen von 12,6 Gew. -%, einem Hydroxylgruppengehalt von 3,8 Gew. -% (jeweils bezogen auf Feststoffgehalt), einem Feststoffgehalt von 65 Gew. -% und einer Viskosität von 12000 mPas. Die wässrige Polyurethanlösung war praktisch lösemittelfrei mit einem pH-Wert von 7,1.

**Polyurethanlösung 2)**

Eine Mischung aus 368 g Polyester PE400HN und 35,4 g Dimethylolpropionsäure wurde mit 354 g Aceton verdünnt und bei 40°C mit einer Mischung aus 153 g Isophorondiisocyanat und 269 g Desmodur® N 3300 versetzt. Bei 60°C wurde solange gerührt, bis der theoretische NCO-Gehalt von 7,3 % erreicht war. Diese isocyanatfunktionelle Zwischenproduktlösung wurde mit 321 g Aceton verdünnt und dann in ein bei Raumtemperatur vorgelegtes Gemisch aus 65,2 g Diethanolamin, 91,4 g N-Methylethanolamin und 150 g Aceton eingerührt und solange bei 50°C gerührt bis der NCO-Gehalt = 0. Man erhielt eine acetonische Dispersion eines hydroxyfunktionellen Polyurethanes. Nach Zugabe von 21,2 g Dimethylethanolamin als Neutralisationsmittel wurde durch Zugabe von 1000 g entsalztem Wasser dispergiert und anschließend das Aceton abdestilliert.
Man erhielt eine klare wässrige, hydroxyfunktionelle Polyurethanlösung mit einem Gehalt an Harnstoffgruppen von 10,7 Gew. -%, einem Hydroxylgruppengehalt von 4,3 Gew. -% (jeweils bezogen auf Feststoffgehalt), einem Feststoffgehalt von 53 Gew. -% und einer Viskosität von 2500 mPas. Die klare wässrige Polyurethanlösung war praktisch lösemittelfrei bei einem pH-Wert von 6,8.

**Polyurethanlösung 3)**

Eine Mischung aus 8,4 g Neopentylglykol, 300 g Desmophen® 2028, 13,5 g MPEG 750 und 48,2 g Dimethylolpropionsäure wurde mit 389 g Aceton verdünnt und bei 40°C mit einer Mischung aus 199,8 g Isophorondiisocyanat und 305,4 g Desmodur® N 3300 versetzt. Bei 60°C wurde solange gerührt, bis der theoretische NCO-Gehalt von 7,7 % erreicht war. Diese isocyanatfunktionelle Prepolymerlösung wurde mit 340 g Aceton verdünnt und dann in ein bei Raumtemperatur vorgelegtes Gemisch aus 252 g Diethanolamin und 165 g Aceton eingerührt und solange bei 50°C gerührt bis der NCO-Gehalt = 0. Man erhielt eine acetonische, trüb-weiße Dispersion eines hydroxyfunktionellen Polyurethanes. Nach Zugabe von 30,4 g Dimethylethanolamin als Neutralisationsmittel wurde durch Zugabe von 650 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 11,4 Gew. -%, einem Hydroxylgruppengehalt von 7.0 Gew. -% (jeweils bezogen auf Feststoffgehalt), einem Feststoffgehalt von 63 Gew. -% und einer Viskosität von 3000 mPas. Die wässrige Polyurethanlösung war klar, farblos und praktisch lösemittelfrei bei einem pH-Wert von 7,4.

**Polyurethanlösung 4)**

Eine Mischung aus 7,5 g Neopentylglykol, 190 g Desmophen® 2028, 67 g Polyester P200H und 37 g Dimethylolpropionsäure wurde mit 321 g Aceton verdünnt und bei 40°C mit einer Mischung aus 159,8 g Isophorondiisocyanat, 281 g Desmodur® N 3300 versetzt. Bei 60°C wurde solange gerührt, bis der theoretische NCO-Gehalt von 7,8% erreicht war. Diese isocyanatfunktionelle Prepolymerlösung wurde mit 292 g Aceton verdünnt und dann in ein bei Raumtemperatur vorgelegtes Gemisch aus 50,4 g Diethanolamin, 108 g N-Methylethanolamin und 136 g Aceton eingerührt und solange bei 50°C gerührt bis der NCO-Gehalt = 0. Man erhielt eine blaustichige acetonische Dispersion eines hydroxyfunktionellen Polyurethanes. Nach Zugabe von 22,1g Dimethylethanolamin als Neutralisationsmittel wurde durch Zugabe von 575 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 12 Gew. -%, einem Hydroxylgruppengehalt von 4,5 Gew. -% (jeweils bezogen auf Feststoffgehalt), einem Feststoffgehalt von 60 Gew. -% und einer Viskosität von 4200 mPas. Die klare wässrige Polyurethanlösung war praktisch lösemittelfrei bei einem pH-Wert von 7,0.

**Polyurethanlösung 5)**

Vergleich: Einsatz eines Triols (Trimethylolpropan) anstelle eines Aminoalkohols mit sekundärer Aminogruppe als Komponente e)

Eine Mischung aus 7,4 g Butandiol, 275 g Desmophen® 2028 und 40,3 Dimethylolpropionsäure wurde mit 339 g Aceton verdünnt und bei 40°C mit einer Mischung aus 169,8 g Isophorondiisocyanat und 298,4 g Desmodur® N 3300 versetzt. Bei 60°C wurde solange gerührt, bis der theoretische NCO-Gehalt von 7,6% erreicht war. Diese isocyanatfunktionelle Prepolymerlösung wurde mit 144 g Aceton verdünnt und dann in ein bei Raumtemperatur vorgelegtes Gemisch aus 273 g Trimethylolpropan und 308 g Aceton eingerührt und solange bei 50°C gerührt bis der NCO-Gehalt = 0. Ca 3 Stunden nach Start dieser Reaktion kommt es zum Gelieren des Ansatzes.

Durch Einsatz eines Triols als Komponente e) anstelle eines Aminoalkohols mit sekundärer Aminogruppe war es auf diesem Weg nicht möglich, wässrige hydroxyfunktionelle Polyurethanlösungen herzustellen.

**Polyurethanlösung 6)**

Vergleich: Einsatz eines Aminoalkohols mit primärer Aminogruppe anstelle eines Aminoalkohols mit sekundärer Aminogruppe als Komponente e)

Eine Mischung aus 8,7 g Butandiol, 275 g Desmophen® C2200 und 42,4 g Dimethylolpropionsäure wurde mit 356 g Aceton verdünnt und bei 40°C mit einer Mischung aus 183,2 g Isophorondiisocyanat und 321,8 g Desmodur® N 3300 versetzt. Bei 60°C wurde solange gerührt, bis der theoretische NCO-Gehalt von 7,8% erreicht bzw. leicht unterschritten war. Diese isocyanatfunktionelle Prepolymerlösung wurde mit 323 g Aceton verdünnt und dann in ein bei Raumtemperatur vorgelegtes Gemisch aus 136,6 g Ethanolamin und 154 g Aceton eingerührt und solange bei 50°C gerührt bis der NCO-Gehalt = 0. Man erhielt eine acetonische Dispersion eines hydroxyfunktionellen Polyurethanes. Nach Zugabe von 25,3 g Dimethylethanolamin als Neutralisationsmittel wurde durch Zugabe von 575 g entsalztem Wasser dispergiert und anschließend das Aceton abdestilliert.

Man erhielt eine klare wässrige, hydroxyfunktionelle Polyurethanlösung mit extrem hoher Viskosität, die durch Zugabe von weiteren 1050 g Wasser verdünnt werden muss, um bei Raumtemperatur fließfähig zu sein. Die so hergestellte, braun gefärbte wässrige Polyurethanlösung hat einen Feststoffgehalt von lediglich 35 Gew. -%, eine Viskosität von 8500 mPas und einen Hydroxylgruppengehalt von 3,8 Gew. -% (jeweils bezogen auf Feststoffgehalt).

Dieser Vergleichsversuch zeigt die Nachteile der Verwendung eines Aminoalkohols e) mit primären Aminogruppen anstelle der bevorzugten Aminoalkohole mit sekundären Aminogruppen. Es werden wässrige Lösungen mit sehr niedrigem Feststoffgehalt und starker Verfärbung erhalten.

**Polyurethanlösung 7)**

Vergleich: Einsatz eines Triamins anstelle eines Aminoalkohols mit sekundärer Aminogruppe als Komponente e)

Eine Mischung aus 8,8 g Butandiol, 260 g Desmophen® C2200 und 39,2 Dimethylolpropionsäure wurde mit 336 g Aceton verdünnt und bei 40°C mit einer Mischung aus 173,2 g Isophorondiisocyanat und 304,2 g Desmodur® N 3300 versetzt. Bei 60°C wurde solange gerührt, bis der theoretische NCO-Gehalt von 7,8% erreicht war. Diese isocyanatfunktionelle Prepolymerlösung wurde mit 306 g Aceton verdünnt und dann in ein bei Raumtemperatur vorgelegtes Gemisch aus 209 g Diethylentriamin und 143 g Aceton eingerührt, dabei kommt es sofort zu starken Ausfällung und Vernetzungsreaktionen.

Dieser Vergleichsversuch zeigt, dass es nicht möglich war, durch Verwendung eines Triamins anstelle einer Aminoalkohol Komponente e) mit einer sekundären Aminogruppe entsprechende wässrige Polyurethanlösungen herzustellen.

**Polyurethanlösung 8)**

Vergleich: Einsatz eines Diols (Propylenglykol) anstelle eines Aminoalkohols mit sekundärer Aminogruppe als Komponente d)

Eine Mischung aus 3,9 g Butandiol und 346,8 g Desmophen® 2028 und 39,3 g Dimethylolpropionsäure wurde mit 368 g Aceton verdünnt und bei 40°C mit einer Mischung aus 169,8 g Isophorondiisocyanat und 298,4 g Desmodur® N 3300 versetzt. Bei 60°C wurde solange gerührt, bis der theoretische NCO-Gehalt von 7,0% erreicht war. Diese isocyanatfunktionelle Prepolymerlösung wurde mit 334 g Aceton verdünnt und dann in ein bei Raumtemperatur vorgelegtes Gemisch aus 155 g 1,2-Propylenglykol und 156 g Aceton eingerührt und solange bei 50°C gerührt bis der NCO-Gehalt = 0. Man erhielt eine acetonische Lösung eines hydroxyfunktionellen Polyurethanes. Nach Zugabe von 23,5 g Triethylamin als Neutralisationsmittel wurde durch Zugabe von insgesamt 2200 g entsalztem Wasser dispergiert und anschließend das Aceton abdestilliert.

Man erhielt eine trübe wässrige, sehr viele Gelteilchen aufweisende hydroxyfunktionelle Polyurethan-Dispersion mit einem Hydroxylgruppengehalt von 3,4 Gew. -% (bezogen auf Feststoffgehalt), einem Feststoffgehalt von lediglich 32 Gew. -% und einer Viskosität von 5000 mPas.

Dieser Vergleichsversuch zeigt, dass es nicht möglich war, durch Verwendung eines Diols mit einer primären und einer sekundären Hydroxylgruppe anstelle einer Aminoalkohol Komponente e) mit einer sekundären Amingruppe entsprechende, klare, homogene und keine Gelteilchen enthaltende wässrige Polyurethanlösungen mit hohen Feststoffgehalten herzustellen.

**Polyurethanlösung 9)**

Eine Mischung aus 6,7 g Neopentylglykol, 118,8 g Desmophen® 2028, 118,8 g Polyester P200H und 38,2 g Dimethylolpropionsäure wurde mit 308 g Aceton verdünnt und bei 40°C mit einer Mischung aus 138,2 g Isophorondiisocyanat, 15,1g Hexamethylendiisocyanat und 278 g Desmodur® N 3300 versetzt. Bei 60°C wurde solange gerührt, bis der theoretische NCO-Gehalt von 7,7 % erreicht war. Diese isocyanatfunktionelle Prepolymerlösung wurde mit 269 g Aceton verdünnt und dann in ein bei Raumtemperatur vorgelegtes Gemisch aus 252,7 g Diisopropanolamin und 130 g Aceton eingerührt und solange bei 50°C gerührt bis der NCO-Gehalt = 0. Man erhielt eine blaustichige acetonische Dispersion des hydroxyfunktionellen Polyurethans. Nach Zugabe von 24,1 g Triethylamin als Neutralisationsmittel wurde durch Zugabe von 520 g entsalztem Wasser dispergiert und anschließend das Aceton abdestilliert.

Man erhielt eine optisch klare wässrige, hydroxyfunktionelle Polyurethanlösung mit einem Gehalt an Harnstoffgruppen von 10,8 Gew. -% und einem Hydroxylgruppengehalt von 6,6 Gew. -% (jeweils bezogen auf Feststoffgehalt). Die Polyurethan-Lösung kann beim Lagern eintrüben, dies war jedoch reversibel und kann z.B. durch leichtes Erwärmen wieder beseitigt werden. Die Polyurethan-Lösung hat einem Feststoffgehalt von 64 Gew. -%, eine Viskosität von 12000 mPas, war farblos und praktisch lösemittelfrei bei einem pH-Wert von 7,6.

**Polyurethanlösung 10)**

Eine Mischung aus 66,3 g Neopentylglykol und 28,5 g Dimethylolpropionsäure wurde mit 315 g Aceton verdünnt und bei 40°C mit einer Mischung aus 142,8 g Hexamethylendiisocyanat und 497 g Desmodur® N 3300 versetzt. Bei 60°C wurde solange gerührt, bis der theoretische NCO-Gehalt von 10,2 % erreicht war. Diese isocyanatfunktionelle Prepolymerlösung wurde mit 286 g Aceton verdünnt und dann in ein bei Raumtemperatur vorgelegtes Gemisch aus 268 g Diethanolamin und 134 g Aceton eingerührt und solange bei 50°C gerührt bis der NCO-Gehalt = 0. Man erhielt eine relativ grobteilige acetonische Dispersion des hydroxyfunktionellen Polyurethans. Nach Zugabe von 3,3 g Ammoniak als Neutralisationsmittel wurde durch Zugabe von 520 g entsalztem Wasser dispergiert und das Aceton abdestilliert.

Man erhielt eine optisch klare wässrige, hydroxyfunktionelle Polyurethanlösung mit einem Gehalt an Harnstoffgruppen von 14,5 Gew. -%, einem Hydroxylgruppengehalt von 8,6 Gew. -% (jeweils bezogen auf Feststoffgehalt), einem Feststoffgehalt von 67 Gew. -% und einer Viskosität von 13000 mPas. Die wässrige Polyurethanlösung war farblos und praktisch lösemittelfrei bei einem pH-Wert von 7,1.

### Polyurethanlösung 11)

Eine Mischung aus 270 g Polyester P200A, 8,5 g Butandiol und 41,6 g Dimethylolpropionsäure wurde mit 350 g Aceton verdünnt und bei 40°C mit einer Mischung aus 179,8 g Isophorondiisocyanat und 316 g Desmodur® N 3300 versetzt. Bei 60°C wurde solange gerührt, bis der theoretische NCO-Gehalt von 7,8 % erreicht war. Diese isocyanatfunktionelle Prepolymerlösung wurde mit 318 g Aceton verdünnt und dann in ein bei Raumtemperatur vorgelegtes Gemisch aus 162 g N-Methylethanolamin und 150 g Aceton eingerührt und solange bei 50°C gerührt bis der NCO-Gehalt = 0. Man erhielt eine trübe acetonische Dispersion des hydroxyfunktionellen Polyurethans. Nach Zugabe von 24,9 g Dimethylethanolamin als Neutralisationsmittel wurde durch Zugabe von 750g entsalztem Wasser dispergiert und das Aceton abdestilliert.

Man erhielt eine optisch klare wässrige, hydroxyfunktionelle Polyurethanlösung mit einem Gehalt an Harnstoffgruppen von 12,3 Gew. -%, einem Hydroxylgruppengehalt von 3,8 Gew. -% (jeweils bezogen auf Feststoffgehalt), einem Feststoffgehalt von 57 Gew. -% und einer Viskosität von 7000 mPas. Die wässrige Polyurethanlösung war farblos und praktisch lösemittelfrei bei einem pH-Wert von 8,9.

### Polyurethanlösung 12)

Eine Mischung aus 500 g Polyester P200A, 33,5 g Dimethylolpropionsäure wurde mit 375 g Aceton verdünnt und bei 40°C mit einer Mischung aus 180,4 g Isophorondiisocyanat und 161 g Desmodur® N 3300 versetzt. Bei 60°C wurde solange gerührt, bis der theoretische NCO-Gehalt von 4,9 % erreicht war. Diese isocyanatfunktionelle Prepolymerlösung wurde mit 340 g Aceton verdünnt und dann in ein bei Raumtemperatur vorgelegtes Gemisch aus 109 g N-Methylethanolamin und 159 g Aceton eingerührt und solange bei 50°C gerührt bis der NCO-Gehalt = 0. Man erhielt eine acetonische Dispersion des hydroxyfunktionellen Polyurethans. Nach Zugabe von 19,3 g Triethylamin als Neutralisationsmittel wurde durch Zugabe von 900g entsalztem Wasser dispergiert und das Aceton abdestilliert.

Man erhielt eine optisch klare wässrige, hydroxyfunktionelle Polyurethanlösung mit einem Gehalt an Harnstoffgruppen von 8,2 Gew. -%, einem Hydroxylgruppengehalt von 2,5 Ge w. -% (jeweils bezogen auf Feststoffgehalt), einem Feststoffgehalt von 50 Gew. -% und einer Viskosität von 1500 mPas. Die wässrige Polyurethanlösung war farblos und praktisch lösemittelfrei bei einem pH-Wert von 6,6.

### Polyurethanlösung 13)

Eine Mischung aus 8,7 g Butandiol, 195 g Desmophen® C2200, 80 g Desmophen 3600 und 42,4 g Dimethylolpropionsäure wurde mit 353 g Aceton verdünnt und bei 40°C mit einer Mischung aus 183,2 g Isophorondiisocyanat und 315,2 g Desmodur® N 100 versetzt. Bei 60°C wurde solange gerührt, bis der theoretische NCO-Gehalt von 7,8 % erreicht bzw. leicht unterschritten war. Diese isocyanatfunktionelle Zwischenproduktlösung wurde mit 320 g Aceton verdünnt und dann in ein bei Raumtemperatur vorgelegtes Gemisch aus 165 g N-Methylethanolamin und 149 g Aceton eingerührt und solange bei 50°C gerührt bis der NCO-Gehalt = 0. Man erhielt eine acetonische Dispersion eines hydroxyfunktionellen Polyurethanes. Nach Zugabe von 25,3 g Dimethylethanolamin als Neutralisationsmittel wurde durch Zugabe von 900 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 12,7 Gew. -%, einem Hydroxylgruppengehalt von 3,8 Gew. -% (jeweils bezogen auf Feststoffgehalt), einem Feststoffgehalt von 51 Gew. -% und einer Viskosität von 3800 mPas. Die wässrige Polyurethanlösung war praktisch lösemittelfrei bei einem pH-Wert von 7,8.

### Polyurethanlösung 14)

Eine Mischung aus 23,9 g Butandiol, 270,3 g Polyester P200H und 19,5 g Dimethylolpropionsäure wurde mit 333 g Aceton verdünnt und bei 40°C mit einer Mischung aus 175,5 g Isophorondiisocyanat und 288,4 g Desmodur® N 3300 versetzt. Bei 60°C wurde solange gerührt, bis der theoretische NCO-Gehalt leicht unterschritten war. Diese isocyanatfunktionelle Zwischenproduktlösung wurde mit 300 g Aceton verdünnt und dann in ein bei Raumtemperatur vorgelegtes Gemisch aus 214 g Diethanolamin und 141 g Aceton in 30 Minuten eingerührt und solange bei 50°C gerührt bis der NCO-Gehalt kleiner 0,1%. Man erhielt eine acetonische Dispersion eines hydroxyfunktionellen Polyurethanes. Nach Zugabe von 12,9 g Triethylamin als Neutralisationsmittel wurde durch Zugabe von 5200 g entsalztem Wasser dispergiert und das Aceton abdestilliert.

Man erhielt eine klare wässrige, hydroxyfunktionelle Polyurethanlösung mit einem Gehalt an Harnstoffgruppen von 11,7 Gew. -%, einem Hydroxylgruppengehalt von 7,0 Gew. -% (jeweils bezogen auf Feststoffgehalt), einem Feststoffgehalt von 66 Gew.-% und einer Viskosität von 10000 mPas. Die wässrige Polyurethanlösung war praktisch lösemittelfrei bei einem pH-Wert von 6,6

**Anwendungstechnische Prüfungen:**

Vernetzer I): Melaminharz Cymel 328 (Cytec Industries B. V., Rotterdam, Niederlande), 85%ig

Vernetzer II): Bayhydur® VP LS 2310 (Bayer MaterialScience AG, Leverkusen, Deutschland), Butanonoxim blokkiertes, in Wasser dispergiertes Hexamethylendiisocyanat-Trimer, ca. 38%ig.

Additol XW 395, Verlaufshilfsmittel (Cytec Surfaces Specialities, Brussels, Belgium)
Surfynol 104E, Entschäumer, (Air Products and Chemicals, USA)

**1) Prüfung Gefrierstabilität**

a) Die wässrigen Polyurethanlösungen 1) und 13) wurden einem Tiefgefrierzyklus unterzogen. Dabei wurden Proben in Glasflaschen für 1 Stunde bei -78°C in Trockeneis eingefroren und dann für 3 Stunden bei Raumtemperatur wieder aufgetaut. Dieser Zyklus wurde fünfmal wiederholt. Beide Lösungen überstehen diese Prozedur völlig unbeschadet, es konnten keine Veränderungen beobachtet bzw. gemessen wurden.

b) Die wässrigen Polyurethanlösungen 1), 2), 9), 10), 13) und 14) wurden für 3 Wochen im Kühlschrank bei 0 bis 4°C gelagert und anschließend wieder auf Raumtemperatur erwärmt. Alle Lösungen überstehen diese Lagerung völlig unbeschadet, es konnten keine Veränderungen beobachtet bzw. gemessen wurden.

c) Die beiden wässrigen Polyurethanlösungen 1) und 13) wurden einem Gefrierfach in Glasflaschen für 2 Wochen bei -10 bis -12°C eingefroren und dann wieder aufgetaut. Beide Lösungen überstehen diese Prozedur völlig unbeschadet, es konnten keine Veränderungen beobachtet bzw. gemessen wurden.

Die erfindungsgemäßen Dispersionen unterscheiden sich dadurch von den meisten wässrigen Dispersionen, die ein Gefrieren nicht ohne Produktschädigung überstehen.

**2) Lacktechnische Prüfergebnisse**

**Lack 1)** 125,9 g Polyurethan-Lösung 1), 24 g Vernetzer I) 1,79 g Additol XW 395, 1,79 g Surfynol 104E, 0,6 g Dimethyethanolamin und 63 g destilliertes Wasser wurden intensiv vermischt. Man erhielt einen wässrigen, lösemittelfreien Klarlack mit einem Feststoffgehalt von 47% und einer Auslaufzeit nach ISO 5 von 39s. Der pH-Wert beträgt 8,7. Der Klarlack war lagerstabil, nach 10 Tagen Lagerung bei 40°C beträgt die Viskosität 37 s, das Aussehen des Lackes war unverändert.

**Lack 2)** 126,5 g Polyurethan-Lösung 3), 23,5 g Vernetzer I) 1,18 g Additol XW 395, 1,18 g Surfynol 104E, 0,4 g Dimethylethanolamin und 34 g destilliertes Wasser wurden intensiv vermischt. Man erhielt einen wässrigen, lösemittelfreien Klarlack mit einem Feststoffgehalt von 53% und einer Auslaufzeit nach ISO 5 von 41 s. Der pH-Wert beträgt 8,7. Der Klarlack war stabil, nach 10 Tagen Lagerung bei 40°C beträgt die Viskosität 41 s.

Die Lacke wurden nach Applikation 10 Minuten bei Raumtemperatur abgelüftet und dann für 30 Minuten bei 140°C bzw. in einer 2. Versuchsreihe 30 Minuten bei 160°C eingebrannt. Man erhielt Lacke mit sehr gutem Verlauf und Filmoptik, sowie folgende Prüfergebnisse:

| 30' 140°C | Lack 1) | Lack 2) |
|---|---|---|
| Pendelhärte s | 159 | 156 |
| Anlösbarkeit 1' | 0000 | 3333 |
| E-Wert mm | 9,5 | 9,5 |

| 30' 160°C | Lack 1) | Lack 2) |
|---|---|---|
| Pendelhärte s | 168 | 160 |
| Anlösbarkeit 1' | 0000 | 0002 |
| E-Wert mm | 9,0 | 9,5 |
| Impact-Test | 80/80 | >80/>80 |
| Gitterschnitt | 0 | 0 |

Die Pendelhärte bzw. Pendeldämpfung wurde in Pendelsekunden nach König gemessen (DIN 53157). Je höher der Wert umso höher die Härte des Lackfilmes.

Die Anlösbarkeit wurde gemessen durch Belastung jeweils 1 Minute mit 4 verschiedenen Lösemitteln:

Beurteilung:

0 = ohne Befund, 1 = geringe Erweichung (reversibel),

2 = mittlere Erweichung (reversibel), 3 = starke Erweichung

4 = Beschädigung des Lackes, 5 = Lack abgelöst

Die Elastizität wurde durch den Erichsentest nach DIN 53156 und durch einen Impact-Test ermittelt. Je höher die Werte umso höher war die Elastizität des Lackes.

Der Gitterschnitt-Test nach DIN 53151 (0 = günstigster Wert; 5 = ungünstigster Wert) = 0 ergibt eine Aussage zur Qualität der Haftung

Die Lacke auf Basis der erfindungsgemäßen wässrigen Polyurethan-Lösungen zeigen eine hohe Härte bereits bei 140°C Aushärtung, bei gleichzeitig exzellenter Elastizität. Die Beständigkeitseigenschaften insbesondere bei 160°C Aushärtung sind ebenso wie die Gitterschnittwerte sehr gut.

**Lack 3)** 62,9 g Polyurethan-Lösung 1), 87,2 g Vernetzer II) 1,29 g Additol XW 395, 1,29 g Surfynol 104E, 0,1 g Dimethyethanolamin und 39 g destilliertes Wasser wurden intensiv vermischt. Man erhielt einen wässrigen, lösemittelfreien Klarlack mit einem Feststoffgehalt von 38% und einer Auslaufzeit nach ISO 5 von 38s. Der pH-Wert beträgt 8,5. Der Klarlack war lagerstabil, nach 10 Tagen Lagerung bei 40°C beträgt die Viskosität 37 s, das Aussehen des Lackes war unverändert.

**Lack 4)** 43,2 g Polyurethan-Lösung 3), 106,8 g Vernetzer II) 1,18 g Additol XW 395, 1,18 g Surfynol 104E, 0,4 g Dimethylethanolamin und 24 g destilliertes Wasser wurden intensiv vermischt. Man erhielt einen wässrigen, lösemittelfreien Klarlack mit einem Feststoffgehalt von 38% und einer Auslaufzeit nach ISO 5 von 35s. Der pH-Wert beträgt 8,5. Der Klarlack war stabil, nach 10 Tagen Lagerung bei 40°C beträgt die Viskosität 34 s.

Lack 5) 61,8 g Polyurethan-Lösung 2), 88,2 g Vernetzer II) 1,21 g Additol XW 395, 1,21 g Surfynol 104E, 0,1 g Dimethylethanolamin und 21 g destilliertes Wasser wurden intensiv vermischt.

Man erhielt einen wässrigen, lösemittelfreien Klarlack mit einem Feststoffgehalt von 40% und einer Auslaufzeit nach ISO 5 von 40s. Der pH-Wert beträgt 8,5. Der Klarlack war stabil, nach 10 Tagen Lagerung bei 40°C beträgt die Viskosität 39 s.

Die Lacke wurden nach Applikation 10 Minuten bei Raumtemperatur abgelüftet und dann für 30 Minuten bei 140°C bzw. in einer 2. Versuchsreihe 30 Minuten bei 160°C eingebrannt. Man erhielt Lacke mit sehr gutem Verlauf und Filmoptik, sowie folgende Prüfergebnisse:

| 30' 140°C | Lack 3) | Lack 5) | Lack 4) |
|---|---|---|---|
| Pendelhärte s | 120 | 68 | 107 |
| Anlösbarkeit 1' | 0024 | 0024 | 0004 |
| E-Wert mm | 10,0 | 10,0 | 10,0 |
| Impact-Test | 20/20 | >80/>80 | >80/>80 |
| Gitterschnitt | 0 | 0 | 0 |

| 30' 160°C | Lack 3) | Lack 5) | Lack 4) |
|---|---|---|---|
| Pendelhärte s | 162 | 120 | 181 |
| Anlösbarkeit 1' | 0003 | 0003 | 0003 |
| E-Wert mm | 10,0 | 10,0 | 10,0 |
| Impact-Test | >80/>80 | >80/>80 | >80/>80 |
| Gitterschnitt | 0 | 0 | 0 |
| Salzsprühtest auf Stahl 144h Unterwanderung an einem Ritz in mm / Blasenmenge (0 bis 5) Blasengröße (0 bis 5) | 8/1/1 | 12/0/0 | 11/1/1 |

Man erhielt Lacke mit exzellenten mechanischen Eigenschaften, hohe Härten insbesondere bei 160°C und exzellenten Elastizitäts- und Gitterschnittwerte. Die Beständigkeitseigenschaften gegenüber Lösemittelbelastung waren ebenso wie die Beständigkeiten im Salzsprühtest sehr gut.

Die wässrigen **Polyurethanlösungen 4), 9), 10), 11), 12) und 14)** wurden mit **Vernetzer I)** vermischt. Nach einem Tag Lagerung wurden Filme mit 240 $\mu$m Nassfilmstärke auf Glasplatten aufgezogen, 15 Minuten bei Raumtemperatur entlüftet und dann für 20 Minuten bei 150°C eingebrannt. Nach dem Abkühlen der Filme auf Raumtemperatur wurde mittels eines Wischtests (100 Doppelhübe mit einem mit Methylethylketon getränkten Wattebausch) die Vernetzungsqualität geprüft, außerdem wurde die Pendelhärte bestimmt:

| | Aussehen des Filmes | 100 Doppelhübe MEK | Pendelhärte (sec) |
|---|---|---|---|
| Polyurethanlösung 4) | klar, glatt, homogen | ohne Befund | 146 |
| Polyurethanlösung 9) | klar, glatt, homogen | ohne Befund | 148 |
| Polyurethanlösung 10) | klar, glatt, homogen | ohne Befund | 186 |
| Polyurethanlösung 11) | klar, glatt, homogen | ohne Befund | 207 |
| Polyurethanlösung 12) | klar, glatt, homogen | ohne Befund | 222 |
| Polyurethanlösung 14) | klar, glatt, homogen | ohne Befund | 154 |

Man erhielt sehr gut vernetzte Lackfilme mit hoher bzw. sehr hoher Härte. Alle Filme zeigten sehr guten Verlauf, waren klar, glatt und homogen.

**Patentansprüche**

1.   Wässrige Polyurethanlösungen mindestens enthaltend

A) wasserlösliche harnstoffgrupponhaltige, hydroxyfunktionelle Polyurethane mit Hydroxylgruppengehalten von 2 bis 10 Gew.-% und Gehalten an Harnstoffgruppen (berechnet als -NH-CO-NH-), die von Aminoalkoholen mit einer primären oder sekundären Aminogruppe und mindestens einer Hydroxylgruppe abgeleitet sind, von 3 bis 20 Gew. -%, jeweils bezogen auf das harnstoffguppenhaltige, hydroxyfunktionelle Polyurethan oder deren wässrige Lösungen,

B) Vernetzer, welche keine freien Isocyanatgruppen enthalten und gegebenenfalls hydrophiliert sind und

C) ggf. weiteren wässrig gelösten bzw. dispergierten bzw. organisch gelösten, ggf. hydroxyfunktionellen Oligomeren bzw. Polymeren

wobei die wässrigen Polyurethanlösungen einen Feststoffgehalt von 55 bis 75 Gew.-% aufweisen.

2. Wässrige Polyurethanlösungen gemäß Anspruch 1, **dadurch gekennzeichnet, dass** diese enthalten:

A) 30 bis 98 Gew. -% der hydroxyfünktionollen, harnstoffgruppenhaltigen Polyurethane bzw. deren Lösungen

B) 2 bis 70 Gew. -% ggf. hydrophil modifizierter, blockierte Isocyanatgruppen aufweisender Polyisocyanatvernetzer und/oder Amino- bzw. Harnstoffharzvernetzer und

C) 0 bis 65 Gew.-% sonstiger wässriger oder organisch gelöster bzw. dispergierter, ggf. hydroxylfunktioneller Oligomere bzw. Polymere,

wobei sich die Prozentangaben zu 100 Gew.-% aufaddieren und auf den Feststoffgehalt der Formulierung bezogen sind.

3. Wässrige Polyurethanlösungen gemäß Anspruch 1 oder 2, **dadurch gekennzeichnet, dass** die wasserlöslichen harnstoffgruppenhaltigen, hydroxyfunktionellen Polyurethane erhältlich sind durch Herstellung NCO-funktioneller Prepolymere durch ein oder mehrstufige Umsetzung von

a) mindestens einem hydroxy- und /oder aminofunktionellen Hydrophilierungsmittel mit mindestens einer Säuregruppe bzw. dem Salz einer Säuregruppe oder mindestens einer tertiären Aminogruppe bzw. dem Salz einer tertiären Aminogruppe,

b) mindestens einem Polyol

c) mindestens einem Polyisocyanat

d) ggf. sonstigen von den Verbindungen der Komponenten a), b) und e) verschiedenen hydroxy- und/oder aminofunktionellen Verbindungen

und deren Reaktion

e) mit einer Aminoalkohol-Komponente, aus Aminoalkoholen mit einer primären oder sekundären Aminogruppe und mindestens einer Hydroxylgruppe umgesetzt werden, wobei der Anteil an Aminoalkoholen mit einer sekundären Aminogruppe bezogen auf die Gesamtmenge der Komponente e) mindestens 60 Gew.-% beträgt,

wobei die aus den Verbindungen der Komponente a) herrührenden Säuregruppen oder tertiäre Aminogruppen im harnstoffgruppenhaltigen, hydroxyfunktionellen Polyurethan durch ganz oder teilweise Neutralisation in ihrer Salzform vorliegen können.

4. Wässrige Polyurethantösungen gemäß Anspruch 1 oder 2, **dadurch gekennzeichnet, dass** die wasserlöslichen harnstoffgruppenhaltigen, hydroxyfunktionellen Polyurethane erhältlich sind, in dem zunächst NCO-funktionelle Prepolymere durch ein- oder mehrstufige Umsetzung von

a) mindestens einem hydroxy- und /oder aminofunktionellen Hydrophilierungsmittel mit mindestens einer Säuregruppe bzw. dem Salz einer Säuregruppe oder mindestens einer tertiären Aminogruppe bzw. dem Salz einer tertiären Aminogruppe,

b) mindestens einem Polyol

c) mindestens einem Polyisocyanat

d) ggf. sonstigen von den Verbindungen der Komponenten a), b) und e) verschiedenen hydroxy- und/oder aminofunktionellen Verbindungen

hergestellt werden und diese dann

e) mit einer Aminoalkohol-Komponente, aus Aminoalkoholen mit einer primären oder sekundären Aminogruppe und mindestens einer Hydroxylgruppen umgesetzt werden, wobei der Anteil an Aminoalkoholen mit einer sekundären Aminogruppe bezogen auf die Gesamttnenge der Komponente e) mindestens 60 Gew.-% beträgt und die so erhaltenen harnstoffgruppenhaltigen, hydroxyfunktionellen Polyurethane

f) in Wasser gelöst werden, wobei vor oder während des Lösungsvorgangs in Wasser die Säure- oder tertiäre Aminogruppen der Hydrophilierungsmittel a) mit einem Neirtralisationsmittel umgesetzt werden.

5. Wässrige Polyuzethaulösungen gemäß Anspruch 3 oder 4, **dadurch gekennzeichnet, dass** in Komponente e) ausschließlich Aminoalkohole mit ausschließlich einer sekundären Aminogruppe und 1 oder 2 Hydroxylgruppen eingesetzt werden.

6. Wässrige Polyurethanlösungen gemäß einem der Ansprüche 1 bis 5, **dadurch gekennzeichnet, dass** als Komponente B) entweder Amino- bzw. Harnstoffvernetzerharze oder blockierte NCO Gruppen enthaltende Vernetzerharze eingesetzt werden.

7. Verwendung wenigstens einer wässrigen Polyurethanlösung gemäß einem der Ansprüche 1 bis 6 zur Herstellung von Lacken und Beschichtungsmitteln.

**Claims**

1. Aqueous polyurethane solutions at least comprising

A) water-soluble hydroxy-functional polyurethanes containing urea groups and having hydroxyl group contents of 2% to 10% by weight and levels of urea groups (calculated as -NH-CO-NH-) derived from amino alcohols having a primary or secondary amino group and at least one hydroxyl group of 3% to 20% by weight, based in each case on the hydroxy-functional polyurethane containing urea groups, or their aqueous solutions,
B) crosslinkers which contain no free isocyanate groups and are optionally hydrophilicized and
C) if desired, further aqueous dissolved and/or dispersed and/or organically dissolved, optionally hydroxy-functional oligomers and/or polymers,

the aqueous polyurethane solutions having a solids content of 55% to 75% by weight.

2. Aqueous polyurethane solutions according to Claim 1, **characterized in that** they contain

A) 30% to 98% by weight of the hydroxy-functional polyurethanes containing urea groups, and/or their solutions,
B) 2% to 70% by weight of optionally hydrophilically modified polyisocyanate crosslinkers having blocked isocyanate groups, and/or amino and/or urea resin crosslinkers and
C) 0% to 65% by weight of other aqueous or organically dissolved and/or dispersed, optionally hydroxyl-functional oligomers and/or polymers,

the percentages adding up to 100% by weight and being based on the solids content of the formulation.

3. Aqueous polyurethane solutions according to Claim 1 or 2, **characterized in that** the water-soluble hydroxy-functional polyurethanes containing urea groups are obtainable by preparing NCO-functional prepolymers by single-stage or multi-stage reaction of

a) at least one hydroxy- and/or amino-functional hydrophilicizing agent having at least one acid group and/or the salt of an acid group, or having at least one tertiary amino group and/or the salt of a tertiary amino group,
b) at least one polyol
c) at least one polyisocyanate
d) if desired, other hydroxy- and/or amino-functional compounds, different from the compounds of components a), b) and e)
and their reaction
e) with an amino alcohol component, comprising amino alcohols having a primary or secondary amino group and at least one hydroxyl group, the fraction of amino alcohols having a secondary amino group, based on the total amount of component e), being at least 60% by weight,

it being possible for the tertiary amino groups or acid groups originating from the compounds of component a), in the hydroxy-functional polyurethane containing urea groups, to be present in their salt form as a result of whole or partial neutralization.

4. Aqueous polyurethane solutions according to Claim 1 or 2, **characterized in that** the water-soluble hydroxy-functional polyurethanes containing urea groups are obtainable by first preparing NCO-functional prepolymers by single-stage or multi-stage reaction of

a) at least one hydroxy- and/or amino-functional hydrophilicizing agent having at least one acid group and/or the salt of an acid group, or having at least one tertiary amino group and/or the salt of a tertiary amino group,
b) at least one polyol
c) at least one polyisocyanate
d) if desired, other hydroxy- and/or amino-functional compounds, different from the compounds of components a), b) and e)
are prepared and these are then reacted
e) with an amino alcohol component, comprising amino alcohols having a primary or secondary amino group and at least one hydroxyl group, the fraction of amino alcohols having a secondary amino group, based on the total amount of component e), being at least 60% by weight,
and dissolving the resulting hydroxy-functional polyurethanes containing urea groups
f) in water, the dissolution operation in water being preceded or accompanied by the reaction of the acid groups or tertiary amino groups of the hydrophilicizing agents a) with a neutralizing agent.

5. Aqueous polyurethane solutions according to Claim 3 or 4, **characterized in that** amino alcohols having exclusively one secondary amino group and one or two hydroxyl groups are used exclusively in component e).

6. Aqueous polyurethane solutions according to any one of Claims 1 to 5, **characterized in that** either amino and/or urea crosslinker resins or crosslinker resins containing blocked NCO groups are used as component B).

7. Use of at least one aqueous polyurethane solution according to any one of Claims 1 to 6 for producing paints and coating materials.

**Revendications**

1. Solutions aqueuses de polyuréthane, contenant au moins :

   A) des polyuréthannes à fonction hydroxy, contenant des groupes urée, solubles dans l'eau, ayant des teneurs en groupes hydroxyle de 2 à 10 % en poids et des teneurs en groupes urée (calculé en tant que -NH-CO-NH-), qui dérivent d'aminoalcools contenant un groupe amino primaire ou secondaire et au moins un groupe hydroxyle, de 3 à 20 % en poids, à chaque fois par rapport au polyuréthane à fonction hydroxy contenant des groupes urée ou ses solutions aqueuses,
   B) des agents de réticulation, qui ne contiennent pas de groupes isocyanate libres et qui sont éventuellement hydrophilisés,
   C) éventuellement d'autres oligomères ou polymères, éventuellement à fonction hydroxy, dissous ou dispersés dans de l'eau ou dissous dans un milieu organique,

   les solutions aqueuses de polyuréthane présentant une teneur en solides de 55 à 75 % en poids.

2. Solutions aqueuses de polyuréthane selon la revendication 1, **caractérisées en ce que** celles-ci contiennent :

   A) 30 à 98 % en poids des polyuréthanes à fonction hydroxy contenant des groupes urée ou leurs solutions,
   B) 2 à 70 % en poids d'agents de réticulation polyisocyanate comprenant des groupes isocyanates bloqués, éventuellement modifiés hydrophiliquement, et/ou d'agents de réticulation amino ou urée, et
   C) 0 à 65 % en poids d'autres oligomères ou polymères, éventuellement à fonction hydroxy, dissous ou dispersés dans de l'eau ou un milieu organique,

   les données de pourcentage totalisant 100 % en poids et se rapportant à la teneur en solides de la formulation.

3. Solutions aqueuses de polyuréthane selon la revendication 1 ou 2, **caractérisées en ce que** les polyuréthanes à fonction hydroxy, contenant des groupes urée, solubles dans l'eau, peuvent être obtenus par fabrication de prépolymères à fonction NCO par réaction à une ou plusieurs étapes de

   a) au moins un agent d'hydrophilisation à fonction hydroxy et/ou amino contenant au moins un groupe acide ou le sel d'un groupe acide ou au moins un groupe amino tertiaire ou le sel d'un groupe amino tertiaire,
   b) au moins un polyol,
   c) au moins un polyisocyanate,
   d) éventuellement d'autres composés à fonction hydroxy et/ou amino différents des composés selon les composants a), b) et c),
et sa réaction
e) avec un composant aminoalcool, issu d'aminoalcools contenant un groupe amino primaire ou secondaire et au moins un groupe hydroxyle, la proportion d'aminoalcools contenant un groupe amino secondaire par rapport à la quantité totale du composant e) étant d'au moins 60 % en poids,

les groupes acides ou groupes amino tertiaires issus des composés selon le composant a) pouvant se présenter dans le polyuréthane à fonction hydroxy, contenant des groupes urée, sous leur forme saline par neutralisation totale ou partielle.

4. Solutions aqueuses de polyuréthane selon la revendication 1 ou 2, **caractérisées en ce que** les polyuréthanes à fonction hydroxy, contenant des groupes urée, solubles dans l'eau, peuvent être obtenus par fabrication tout d'abord de prépolymères à fonction NCO par réaction à une ou plusieurs étapes de

a) au moins un agent d'hydrophilisation à fonction hydroxy et/ou amino contenant au moins un groupe acide ou le sel d'un groupe acide ou au moins un groupe amino tertiaire ou le sel d'un groupe amino tertiaire,
b) au moins un polyol,
c) au moins un polyisocyanate,
d) éventuellement d'autres composés à fonction hydroxy et/ou amino différents des composés selon les composants a), b) et e),
puis réaction de celui-ci
e) avec un composant aminoalcool, issu d'aminoalcools contenant un groupe amino primaire ou secondaire et au moins un groupe hydroxyle, la proportion d'aminoalcools contenant un groupe amino secondaire par rapport à la quantité totale du composant e) étant d'au moins 60 % en poids,
et
f) dissolution des polyuréthanes à fonction hydroxy, contenant des groupes urée, ainsi obtenus dans de l'eau, les groupes acides ou amino tertiaires de l'agent d'hydrophilisation a) étant mis en réaction avec un agent de neutralisation avant ou pendant le processus de dissolution dans de l'eau.

5. Solutions aqueuses de polyuréthane selon la revendication 3 ou 4, **caractérisées en ce que** seuls des aminoalcools contenant exclusivement un groupe amino secondaire et 1 ou 2 groupes hydroxyle sont utilisés dans le composant e).

6. Solutions aqueuses de polyuréthane selon l'une quelconque des revendications 1 à 5, **caractérisées en ce que** des résines de réticulation amino ou urée ou des résines de réticulation contenant des groupes NCO bloqués sont utilisées en tant que composant B).

7. Utilisation d'au moins une solution aqueuse de polyuréthane selon l'une quelconque des revendications 1 à 6 pour la fabrication de laques et d'agents de revêtement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4237965 A
- DE 4337961 A
- DE 10214028 A
- DE 10147546 A
- DE 19849207 A
- EP 0916647 A
- DE 2446440 A

**In der Beschreibung aufgeführte Nicht-Patentliteratur**

- **HOUBEN-WEYL.** Methoden der organischen Chemie. 1987, vol. E 20, 1659
- **J. W. ROSTHAUSER ; K. NACHTKAMP.** Advances in Urethane Science and Technology. 1987, vol. 10, 121-162
- **D.DIETRICH ; K. UHLIG.** Ullmann's Encyclopedia of Industrial Chemistry. 1992, vol. A 21, 677
- Ullmanns Encyklopädie der technischen Chemie. Verlag Chemie GmbH, 1980, vol. 19, 31 ff
- **H. WAGNER ; H.F. SARX.** Lackkunstharze. Carl Hanser Verlag, 1971
- **D.H. SOLOMON.** The Chemistry of Organic Film-formers. John Wiley Sons, Inc, 1967, 235 ff
- **HOUBEN-WEYL.** Methoden der organischen Chemie. Georg Thieme Verlag, 1963, vol. 14/2, 319 ff
- **D. STOYE ; W. FREITAG.** Lackharze, Chemie, Eigenschaften und Anwendungen. Carl Hanser Verlag, 1996, 104 ff